# EUROPÄISCHE PATENTANMELDUNG

(11) **EP 3 646 940 A1**
(43) Veröffentlichungstag der Anmeldung: **06.05.2020**
(21) Anmeldenummer: 19206152.1
(22) Anmeldetag: 30.10.2019
(51) Int. Cl.: B01D 65/08, B01D 63/08

(54) **FILTRATIONSVORRICHTUNG FÜR ULTRAFEINE FILTRATION**

(30) Priorität: 30.10.2018 LU 100974
(71) Anmelder: Big Dutchman International GmbH, 49377 Vechta (DE)
(72) Erfinder: Themann, Ludger, 49377 Vechta (DE); Drellmann, Marcel, 49377 Vechta (DE)
(74) Vertreter: Eisenführ Speiser

(57) **Zusammenfassung**

Die Erfindung betrifft eine Filtrationsvorrichtung, umfassend eine Fluidzulauföffnung, eine Fluidablauföffnung, einen Fluidverteilerraum, der die Fluidzulauföffnung mit der Fluidablauföffnung verbindet, um eine Strömung eines durch die Fluidzulauföffnung einströmenden partikelbelasteten Fluids zu der Fluidablauföffnung zu ermöglichen, eine Vielzahl von Filterscheibeneinheiten entlang einer Mittellängsachse gestapelt angeordnet sind, wobei jede Filterscheibeneinheit eine Fluiddurchlässigkeit und eine Partikelsperrfunktion aufweist um eine Filtrationswirkung auf das partikelbelastete Fluid zu bewirken, eine Filtratablauföffnung, einen Filtratsammelraum, der mit der Filtratablauföffnung in Fluidverbindung steht, wobei jede Filterscheibeneinheit des Filterstapels den Fluidverteilerraum von dem Filtratsammelraum trennt, sodass Fluid durch jede Filterscheibeneinheit von dem Fluidverteilerraum in den Filtratsammelraum übertreten kann und Partikel von jeder Filterscheibeneinheit am Durchtritt aus dem Fluidverteilerraum in den Filtratsammelraum gehindert wird.

## Beschreibung

Die Erfindung betrifft eine Filtrationsvorrichtung, mit einer Fluidzulauföffnung, einer Fluidablauföffnung und einer Filtratablauföffnung. Die Fluidzulauföffnung und die Fluidablauföffnung sind über einen Fluidverteilerraum miteinander verbunden, aus dem das darin befindliche Fluid durch eine Vielzahl von Filterscheibeneinheiten in einen Filtratsammelraum strömen kann, aus dem es dann als gefiltertes Fluid, also Filtrat, aus der Filtratablauföffnung abfließen kann.

Filtrationsvorrichtungen dieser Bauart werden für ultrafeine Filtrationsvorgänge eingesetzt. Grundsätzlich kann eine besonders feine Filtration erreicht werden, indem eine partikelbelastetes Fluid einer seriellen Filterung unterzogen wird, bei der es zunächst in einem Grobfilter gefiltert wird, das daraus entstehende Filtrat einem feineren Filter zugeführt wird und gegebenenfalls weitere Filterstufen nachgeschaltet werden. Vorteilhaft an einer solchen seriellen Filterung ist, dass der Effekt, dass eine Verstopfung des Filters mit Partikeln den Fluiddurchgang durch den Filter hindert, reduziert wird, in dem die Filtration auf mehrere Filterstufen mit unterschiedlicher Partikeldurchlässigkeit verteilt wird.

Ein anderer Ansatz zur Erzielung besonders feiner Filtrationen besteht darin, das partikelbelastete Fluid unmittelbar auf eine ausreichend feine filtere Stufe aufzugeben und durch diese zu filtern. Bei dieser Art der einstufigen Filterung kann die Effizienz einerseits dadurch erhöht werden, dass eine möglichst große Filterfläche bereitgestellt wird, andererseits können Maßnahmen zum Abtragen von Partikeln, welche die Filtrationsstufe verstopfen, getroffen werden.

Grundsätzlich sind auch Filterungsverfahren- und Vorrichtungen denkbar, welche beide Methoden miteinander kombinieren, um hierdurch eine besonders feine Filtration zu erzielen.

Aus EP 2 521 606 B1 ist eine Membranfiltrationseinrichtung vorbekannt, welche mittels einer Antriebsvorrichtung in eine oszillierende Bewegung versetzt wird. Durch diese oszillierende Bewegung wird eine Relativbewegung zwischen dem partikelbelasteten Fluid und den Filterstufen innerhalb der Membranfiltrationseinrichtung, namentlich den Membranen, erzeugt. Diese Relativbewegung führt zu einer Scherkrafteinwirkung im Bereich der Oberfläche der Membranen und kann wirksam Partikel von den Membranen ablösen. Die Membranen werden hierdurch über einen langen Betriebszeitraum durchlässig für das Filtrat gehalten, sodass eine effiziente Filtration erfolgt.

Generell kann mit Filtrationsvorrichtungen dieser Bauart eine wirksame Filtration über einen langen Betriebszeitraum zwischen zwei Wartungsintervallen in denen die Membranen ausgetauscht werden müssen, ausgeführt werden. Allerdings erweisen sich die bekannten Vorrichtungen in verschiedenen funktionellen Aspekten als noch verbesserungsfähig.

Zum einen muss im Zuge des Austauschs der Membranen der Filterstapel vom Benutzer neu aufgebaut werden und hierbei müssen die Membranen und deren Trägerscheiben in richtiger Reihenfolge und Anordnung montiert werden. Bei dieser Montage ist bei vielen Filtrationsvorrichtungen zudem auf eine korrekte Abdichtung an bestimmten Stellen und an die Bereitstellung von Durchlässigkeiten oder Anordnung von Durchlassöffnungen an anderen Stellen zu achten, um einerseits die gewünschte Verteilung des Fluids, andererseits die gewünschte Sammlung des Filtrats auf den dazu vorgesehenen Strömungswegen zu erreichen. Es hat sich gezeigt, dass im Stand der Technik die Gefahr besteht, dass einerseits unerwünschte Undichtigkeiten, andererseits unerwünschte Blockaden auftreten können, welche den effizienten Betrieb der Filtrationsvorrichtungen beeinträchtigen oder vollständig verhindern können. Solche Undichtigkeiten oder Blockaden können unmittelbar auffallen, können aber auch erst entdeckt werden, wenn Mängel an der Filtrationsqualität erkannt werden.

Grundsätzlich ist es wünschenswert, den Zeitraum der Betriebsdauer zwischen zwei Wartungsvorgängen, in denen die Filterstufen, beispielsweise die Membranen, gewechselt werden müssen, zu verlängern, ohne hierbei die Filtrationseffizienz, also einerseits die Filtrationsqualität als auch den Filtratdurchsatz, zu beeinträchtigen. Allerdings hat sich gezeigt, dass bei langen Betriebszeiträumen die Wechselwirkung der Kräfte, die durch die oszillierende Bewegung auf die Filterstufen einwirken, zu Schäden an den Filterstufen führen können.

Der Erfindung liegt die Aufgabe zugrunde, eine Filtrationsvorrichtung bereitzustellen, welche diese Nachteile überwindet.

Diese Aufgabe wird gelöst mit einer Filtrationsvorrichtung, umfassend eine Fluidzulauföffnung, eine erste Fluidablauföffnung, einen Fluidverteilerraum, der die Fluidzulauföffnung mit der Fluidablauföffnung verbindet, um eine Strömung eines durch die Fluidzulauföffnung einströmenden partikelbelasteten Fluids zu der Fluidablauföffnung zu ermöglichen, eine Vielzahl von Filterscheibeneinheiten entlang einer Mittellängsachse gestapelt angeordnet sind, wobei jede Filterscheibeneinheit eine Fluiddurchlässigkeit und eine Partikelsperrfunktion aufweist um eine Filtrationswirkung auf das partikelbelastete Fluid zu bewirken, eine zweite Filtratablauföffnung, einen Filtratsammelraum, der mit der Filtratablauföffnung in Fluidverbindung steht, wobei jede Filterscheibeneinheit des Filterstapels den Fluidverteilerraum von dem Filtratsammelraum trennt, sodass Fluid durch jede Filterscheibeneinheit von dem Fluidverteilerraum in den Filtratsammelraum übertreten kann und Partikel von jeder Filterscheibeneinheit am Durchtritt aus dem Fluidverteilerraum in den Filtratsammelraum gehindert wird, wobei die Vielzahl der Filterscheibeneinheiten zu einem sich entlang einer Mittellängsachse erstreckenden Filterstapel aufeinandergestapelt sind, in dem der Fluidverteilerraum angeordnet ist und die Filterscheibeneinheiten in einem Außenumfangsbereich des Filterstapels gegeneinander abgedichtet sind, um den in dem Filterstapel angeordneten Fluidverteilerraum gegen einen den Filterstapel umgebenden Raum abzudichten, wobei die Abdichtung zweier benachbart in dem Filterstapel angeordneter Filterscheibeneinheiten durch direkte Anlage einer an jeder Filterscheibeneinheit ausgebildeten ersten Filterscheibendichtung an einer an jeder Filterscheibeneinheit ausgebildeten zweiten Filterscheibendichtung ausgebildet ist.

Erfindungsgemäß ist eine Fluidzulauföffnung und eine Fluidlablauföffnung vorgesehen. Das durch die Fluidzulauföffnung in die Filtrationsvorrichtung einströmende partikelbelastete Fluid kann über einen Fluidverteilerraum zu der Fluidlablauföffnung strömen. Auf diesem Strömungsweg wird das partikelbelastete Fluid nicht gefiltert. Der Fluidverteilerraum grenzt an eine Vielzahl von Filterscheibeneinheiten, sodass diese Vielzahl von Filterscheibeneinheiten durch das partikelbelastete Fluid auf dem Weg von der Fluidzulauföffnung zu der Fluidlablauföffnung benetzt werden. Das Fluid kann durch diese Filterscheibeneinheiten hindurchtreten und wird hierbei gefiltert, sodass Filtrat entsteht. Dieses Filtrat wird in einer Strömungsrichtung hinter den Filterscheibeneinheiten liegendem Filtratsammelraum gesammelt und einer Filtratablauföffnung zugeführt. Die erfindungsgemäße Filtrationsvorrichtung arbeitet somit in einem konstanten Durchlauf des partikelbelasteten Fluids und einem über einen Bypass abgezogenem Filtrat. Durch diese Art der Strömungsführung kann ein langer Betriebszeitraum zwischen zwei Wartungsintervallen gewährleistet werden.

Erfindungsgemäß werden eine Vielzahl von Filterscheibeneinheiten zu einem Filterstapel aufeinandergestapelt. Innerhalb dieses Filterstapels ist der Fluidverteilerraum angeordnet. Dies schließt nicht aus, dass Abschnitte des Fluidverteilerraums, beispielsweise im Zulaufbereich aus der Fluidzulauföffnung oder im Ablaufbereich aus der Fluidlablauföffnung auch außerhalb des Filterstapels angeordnet sein können. Erfindungsgemäß ist aber der Fluidverteilerraum, der sich im Kontakt mit den die filtrationsbewirkenden Filterscheibeneinheiten befindet, innerhalb des Filterstapels angeordnet. Das partikelbelastete Fluid durchströmt daher den Filterstapel auf diesem Weg durch den Fluidverteilerraum und der Filterstapel ist zu diesem Zweck in besonderer Weise abgedichtet.

Um diese Abdichtung zu bewirken sind an jeder Filterscheibeneinheit eine erste und eine zweite Filterscheibendichtung ausgebildet. Diese erste und zweite Filterscheibendichtung wirken zusammen und bewirken die Abdichtung, indem die Filterscheibeneinheiten direkt aufeinander aufgelegt werden. Durch dieses direkte Aufeinanderlegen der Filterscheibeneinheiten kommen die erste Filterscheibendichtung einer Filterscheibeneinheit mit der zweiten Filterscheibendichtung der anderen Filterscheibeneinheit in Kontakt und dichten wirksam gegeneinander ab. Sowohl die erste Filterscheibendichtung als auch die zweite Filterscheibendichtung sind direkt an der Filterscheibeneinheit ausgebildet, es handelt sich also nicht um separat einzulegende Dichtungselemente. Die erfindungsgemäße Filtrationsvorrichtung und insbesondere der dafür aufzubauende Filterstapel können daher einerseits effizient, andererseits mit hoher Sicherheit gegen Montagefehler und dadurch erzeugte Undichtigkeiten aufgebaut werden. Insbesondere kann durch die Ausgestaltung einer ersten Filterscheibendichtung und einer zweiten Filterscheibendichtung eine definierte Anordnung von zwei benachbart aufeinander aufzulegenden Filterscheibeneinheiten dem Benutzer vorgegeben werden und durch die direkte integrale Ausbildung der Dichtung wird die Nutzung einer separat einzulegenden Dichtung vermieden. Erfindungsgemäß wird gemäß diesem Aspekt der Erfindung daher einerseits die Anordnung, andererseits die Dichtungswirkung in komfortabler und besonders sicherer Weise erzielt.

Erfindungsgemäß sind die Filterscheibeneinheiten entlang einer Mittellängsachse gestapelt angeordnet. Diese Anordnung ermöglicht es, die Filterscheibeneinheiten um die Rotationsachse zu bewegen, was eine Schwenkbewegung in Form einer oszillierenden Bewegung sein kann oder eine Bewegung mit einer konstanten Rotation. Bevorzugt sind die Filterscheibeneinheiten als flächige Elemente mit einer etwa kreisförmigen Umfangskontur ausgebildet, jedoch sind auch andere Umfangskonturen mit beispielsweise polygonalen Geometrien als dreieckige, viereckige oder mehreckige Kontur realisierbar.

Jeder Filterscheibeneinheit weist eine Fluiddurchlässigkeit und eine Partikelsperrfunktion auf und bewirkt hierdurch die gewünschte Filtration auf dem Strömungsweg von der Fluidzulauföffnung zu der Filtratablauföffnung. Diese Fluiddurchlässigkeit/ Partikelsperrfunktion kann realisiert sein indem die gesamte Filterscheibeneinheit als integrale Struktur eine entsprechende Filterfläche und Strömungsführung verwirklicht, bei einer solchen integralen Ausführung als einstückiges Bauteil wäre die gesamte Filterscheibeneinheit auszutauschen oder aufzuarbeiten, wenn nach längerer Nutzungsdauer der Filter mit Partikeln zugesetzt ist. Jede Filterscheibeneinheit kann aber auch mehrstückig ausgeführt sein, beispielsweise indem eine mechanisch stabile Trägerstruktur, welche die Strömungsführung innerhalb der Filterscheibeneinheit bereitstellt mit einer oder zwei Filtermembranen einen Bestandteil der Filterscheibeneinheit oder die gesamte Filterscheibeneinheit bilden.

Erfindungsgemäß sind an der Filterscheibeneinheit eine erste Filterscheibendichtung und eine zweite Filterscheibendichtung ausgebildet. Diese erste und zweite Filterscheibendichtung kann sich durch entsprechende Dichtungsbereiche charakterisieren, die zum Zwecke einer Dichtungswirkung zwischen zwei aufeinanderliegenden Filterscheibeneinheiten ausgebildet sind. Die erste und zweite Filterscheibendichtung kann aus dem gleichen Material, wie die Filterscheibeneinheit selbst oder eine Filterträgerscheibe, die Bestandteil der Filterscheibeneinheit ist, selbstausgeführt sein. Die erste und zweite Filterscheibendichtung sind integral an der Filterscheibeneinheit ausgebildet. Hierunter ist zu verstehen, dass weder die erste Filterscheibendichtung noch die zweite Filterscheibendichtung als separates Dichtungselement ausgeführt sind, sondern stattdessen entweder an einem tragenden Strukturelement der Filterscheibeneinheit, beispielsweise einer Filterträgerscheibe, einstückig angeformt sind oder im Falle einer insgesamt integralen Filterscheibeneinheit an dieser Filterscheibeneinheit einstückig angeformt sind. Die erste Filterscheibendichtung oder die zweite Filterscheibendichtung können aus einem unterschiedlichen Material als die Filterscheibeneinheit selbst oder eine Trägerstruktur wie die Filterträgerscheibe selbst ausgebildet sein, beispielsweise kann die erste oder zweite Filterscheibendichtung durch ein Anspritzverfahren oder ein Co-Extrusionsverfahren gebildet werden und hierdurch einstückig ausgebildet sein, wie zuvor beschrieben. Bevorzugt ist nur eine von der ersten und zweiten Filterscheibendichtung aus einem solchen unterschiedlichen Material ausgeführt, wodurch eine wirksame und mechanisch belastbare Dichtung und Positionierung zwischen zwei aufeinanderliegenden Filterscheibeneinheiten erzielt wird. In bestimmten Anwendungen kann aber auch eine Ausgestaltung von beiden Filterscheibendichtungen aus einem unterschiedlichen Material vorteilhaft sein, insbesondere kann auch die erste Filterscheibendichtung aus einem unterschiedlichen Material als die zweite Filterscheibendichtung sein.

Die erste und zweite Filterscheibendichtung wirken zusammen, um die Dichtungswirkung zwischen zwei benachbarten, aufeinanderliegenden Filterscheibeneinheiten zu bewirken. Hierzu kann ein flächiger oder linienförmiger Kontakt zwischen der ersten und zweiten Filterscheibendichtung geometrisch vorgesehen sein. Die dichtende Zusammenwirkung kann durch eine teilweise elastische oder plastische Verformung von der ersten und/oder der zweiten Filterscheibendichtung bewirkt werden. Die erste und zweite Filterscheibendichtung können nach Art eines Formschlusses kongruent zueinander passen, beispielsweise durch eine vorspringende Kontur einer der beiden Dichtungen, die in eine Vertiefungskontur der anderen Dichtung eintaucht.

Besonders bevorzugt ist es, dass die erste und zweite Filterscheibendichtung so ausgeführt sind, dass eine fehlerhafte Montage von zwei Filterscheibeneinheiten mit Anlage der ersten Filterscheibendichtung der einen Filterscheibeneinheit auf der ersten Filterscheibendichtung der anderen Filterscheibeneinheit oder mit gegenseitiger Anlage der jeweils zweiten Filterscheibendichtungen entweder konstruktiv nicht realisierbar ist, beispielsweise weil hierdurch die Höhe des gesamten Filterstapels nicht mehr zum Einbauraum passt oder aber dem Benutzer eine unmittelbar optisch oder haptisch erkennbar Fehlmontage signalisiert, beispielsweise indem ein Versatz oder ein unzureichendes Aufeinanderpassen der beiden Filterscheibeneinheiten auftritt.

Hierdurch können Montagefehler durch fehlerhaftes Auseinanderfügen der Filterscheibeneinheiten vorgebeugt werden.

Gemäß einer ersten Ausführungsform ist vorgesehen, dass jede Filterscheibeneinheit eine Filterträgerscheibe umfasst, die eine Trägerscheibe aus einem ersten Material und einen an der Trägerscheibe integral ausgebildeten Dichtungsabschnitt, vorzugsweise einen mit der Trägerscheibe stoffschlüssig verbundenen Dichtungsabschnitt aus einem von dem ersten Material verschiedenen zweiten Material umfasst, wobei der Dichtungsabschnitt die erste Filterscheibendichtung bildet. Gemäß dieser Ausführungsform ist in jeder Filterscheibeneinheit eine Filterträgerscheibe umfasst, die ihrerseits die erste Filterscheibendichtung umfasst. Die erste Filterscheibendichtung ist dabei als Dichtungsabschnitt an einer Trägerscheibe ausgebildet, der Dichtungsabschnitt ist integral an der Trägerscheibe ausgebildet. Insbesondere ist der Dichtungsabschnitt stoffschlüssig, also beispielsweise angespritzt, verklebt oder verschweißt, mit der Trägerscheibe verbunden. Hierdurch ist die erste Filterscheibendichtung verliersicher und positionsdefiniert an der Filterscheibeneinheit angeordnet. Erfindungsgemäß ist dabei vorzugsweise vorgesehen, dass der Dichtungsabschnitt, welcher die erste Filterscheibendichtung bildet, aus einem anderen Material ausgebildet ist als die Trägerscheibe. Hierdurch kann beispielsweise ein elastischeres oder plastischeres Material als erste Filterscheibendichtung verwendet werden als das Material, welches als Trägerscheibenmaterial dient und von dem eine höhere strukturelle Festigkeit, geringere Elastizität und Plastizität als von dem Dichtungsabschnitt erwartet wird, der die erste Filterscheibendichtung bildet. Die höhere Elastizität und Plastizität des Dichtungsabschnitts kann auch vorteilhaft funktionell dazu genutzt werden, eine Dämpfungswirkung bereitzustellen, die Stoßeinwirkungen auf das Filterpaket oder innerhalb des Filterpakets dämpft und hierdurch die mechanische Belastung und die Geräuschentwicklung reduziert. Solche Stoßeinwirkungen können radial, axial oder in Umfangsrichtung in Bezug auf die Mittellängsachse auftreten.

Gemäß dieser Ausführungsform kann die Filterscheibeneinheit beispielsweise zusätzlich eine oder zwei Membranen enthalten, die auf der Filterträgerscheibe auf einer Seite oder auf zwei Seiten anliegen und die Filtration bewirken. Die Filterträgerscheibe ist in diesem Fall kein Einwegartikel und wird im Zuge eines Wartungsvorgangs typischerweise nicht ausgetauscht, stattdessen werden bei dieser Ausführungsform die Membranen des Filterstapels getauscht und die Filterträgerscheiben wiederverwendet. Als integrale Ausbildung ist hierbei zu verstehen, dass Trägerscheibe und Dichtungsabschnitt ein einstückiges Bauteil bilden, der Dichtungsabschnitt als unverlierbar an der Trägerscheibe befestigt ist. Insbesondere können Trägerscheibe und Dichtungsabschnitt hierzu in einem gemeinsamen Fertigungsschritt hergestellt werden und als fertiges Bauteil aus einem solchen gemeinsamen Fertigungsschritt entstehen. Unter einem Stoffschluss ist hierbei eine kohäsive oder adhäsive Verbindung zwischen dem Dichtungsabschnitt und der Trägerscheibe zu verstehen. Eine kohäsive Verbindung wird beispielsweise erzielt, wenn Dichtungsabschnitt und Trägerscheibe aus ähnlichen oder identischen Materialien bestehen und in einem Fertigungsschritt gegossen, gespritzt oder anderweitig urgeformt werden oder durch Verschweißung oder Lösungsmittelkleben miteinander verbunden werden. Eine adhäsive Verbindung wird beispielsweise erzielt, wenn Dichtungsabschnitt und Trägerscheibe miteinander verlötet oder verklebt werden oder wenn der Dichtungsabschnitt an die Trägerscheibe als unterschiedliches Material angespritzt wird.

Gemäß einer weiteren bevorzugten Ausführungsform ist vorgesehen, dass jede Filterscheibeneinheit eine Filterträgerscheibe umfasst und dass die erste Filterscheibendichtung durch eine im Bereich des Außenumfangs der Filterträgerscheibe in Bezug auf die Mittellängsachse umlaufende, im Längsschnitt entlang der Mittellängsachse als Vertiefung oder ein Vorsprung ausgebildet ist und die zweite Filterscheibendichtung durch eine im Bereich des Außenumfangs der Filterträgerscheibe in Bezug auf die Mittellängsachse umlaufende, im Längsschnitt entlang der Mittellängsachse als entsprechend kongruenter Vorsprung oder Vertiefung ausgebildet ist, wobei die durch die erste und zweite Filterscheibendichtung ausgebildete Kombination aus Vorsprung und Vertiefung dichtend zusammenpasst. Gemäß dieser Ausführungsform wird die erste Filterscheibendichtung durch eine umlaufende Vertiefung oder einen umlaufenden Vorsprung ausgebildet, also beispielsweise als Ringnut oder als umlaufender Wulst, der an der Filterträgerscheibe ausgebildet ist. Entsprechend hierzu passend wird die zweite Filterscheibendichtung als zu dem Vorsprung der ersten Filterscheibendichtung passende Vertiefung beziehungsweise als zu der Vertiefung der ersten Filterscheibendichtung passender Vorsprung ausgebildet. Erste und zweite Filterscheibendichtung sind hierdurch kongruent zueinander und können bei Aufeinanderfügen die Dichtungswirkung erzielen.

Der Vorsprung und die Vertiefung sind grundsätzlich umlaufend im Außenrandbereich der Filterscheibeneinheit angeordnet und können dadurch im Umfangsbereich die Dichtungswirkung erzielen. Der hierzu innenliegende Bereich zwischen zwei Filterscheibeneinheiten bildet dadurch einen Abschnitt des Verteilerraums.

Noch weiter ist es bevorzugt, die Filtrationsvorrichtung fortzubilden durch eine Antriebsvorrichtung, die ausgebildet ist, um den Filterstapel mit einem Drehmoment um die Mittellängsachse anzutreiben, insbesondere in eine um die Mittellängsachse konstant rotierende oder reziprok schwenkende Bewegung anzutreiben. Gemäß dieser Ausführungsform ist der Filterstapel mit einer Antriebsvorrichtung verbunden und wird durch diese Antriebsvorrichtung mit einem Drehmoment um die Mittellängsachse beaufschlagt. Dieses Drehmoment kann ein konstantes Drehmoment sein, um eine konstante Rotation des Filterstapels zu erzielen du hierdurch beispielsweise eine Zentrifugalwirkung auf das Fluid im Verteilerraum auszuüben. Hierdurch kann eine gewünschte Scherkraftwirkung auf der Oberfläche der Filterscheibeneinheiten erzielt werden, die eine Ablösung von verstopfenden Partikeln bewirkt. Das Drehmoment kann auch mit Wechseln der Wirkungsrichtung auf den Filterstapel aufgebracht werden, wodurch dieser in eine reziproke, also schwingende Bewegung versetzt werden kann. Durch diese schwingende Bewegung kann aufgrund der Massenträgheit des Fluids ebenfalls eine Scherkraft auf der Oberfläche der Filterscheibeneinheiten erzeugt werden, was wiederum zur gewünschten Ablösung und Freihalten der Filterscheibeneinheiten, beispielsweise der darin umfassten Membranen führen kann. Insgesamt dient die Antriebseinheit folglich dazu, Partikel von den Filterscheibeneinheiten abzulösen und in dem Fluidverteilerraum schwebend im Fluid zu halten und hierdurch eine gewünschte Konzentrierung dieser Partikel in dem Fluid, welches von der Fluideinlassöffnung zu der Fluidlablauföffnung strömt, zu erreichen.

Dabei ist es besonders bevorzugt, wenn jede Filterscheibeneinheit einen ersten Drehmomentübertragungsabschnitt umfasst, der ausgebildet ist, um das von der Antriebsvorrichtung antreibende Drehmoment um die Mittellängsachse auf die Filterscheibeneinheit zu übertragen, wobei der erste Drehmomentübertragungsabschnitt als Flansch im Bereich der Mittellängsachse ausgebildet ist, der mit einer sich von dem Flansch erstreckenden Filterträgerscheibe verbunden ist und aus einem ersten Material besteht, das von einem zweiten Material, aus dem die Filterträgerscheibe besteht, verschieden ist. Gemäß dieser Ausführungsform wird das Drehmoment, welches durch die Antriebsvorrichtung auf dem Filterstapel aufgebracht wird, über einen ersten Drehmomentübertragungsabschnitt auf jede der in dem Filterstapel angeordneten Filterscheibeneinheiten aufgebracht. Diese direkte Einwirkung des Drehmoments aus der Antriebsvorrichtung auf die Filterscheibeneinheiten führt zu einer Entlastung etwaiger konstruktiver Verbindungsvorrichtungen und Verbindungsflächen zwischen den Filterscheibeneinheiten selbst, insbesondere kann hierdurch die über die erste und zweite Filterscheibendichtung bewirkte Dichtungsfläche zwischen zwei benachbarten Filterscheibeneinheiten von etwaigen Drehmomenten um die Mittellängsachse freigehalten werden und die Dichtungswirkung hierdurch in verbesserter Weise sichergestellt werden. Durch die Wahl eines von dem Filterträgerscheibenmaterial verschiedenen Material kann eine hohe Festigkeit bei gleichzeitiger Verringerung der Gefahr einer Kaltverschweißung erzielt werden. So kann beispielsweise der erste Drehmomentübertragungsabschnitt als Flansch aus einem metallischen Material ausgeführt sein und die Filterträgerscheibe aus einem Kunststoff hergestellt sein.

Noch weiter ist es dabei bevorzugt, wenn jede Filterscheibeneinheit eine Filterträgerscheibe umfasst und ein zweiter Drehmomentübertragungsabschnitt durch eine am Außenumfang der Filterträgerscheibe ausgebildete Ausnehmung oder durch einen am Außenumfang der Filterträgerscheibe ausgebildeten Vorsprung gebildet wird. Gemäß dieser Ausführungsform ist ein zusätzlicher oder alternativer zweiter Drehmomentübertragungsabschnitt am Außenumfang einer Filterträgerscheibe angeordnet. Diese Anordnung des zweiten Drehmomentübertragungsabschnitts hat einerseits den Vorteil, dass das Drehmoment in ein für die mechanische Struktur der Filterscheibeneinheit maßgebliches Bauelement in Form der Filterträgerscheibe eingebracht wird und hierdurch eine hohe Zuverlässigkeit auch bei wiederholter Verwendung dieser Filterträgerscheibe und bei wechselnden Lasteinwirkungen erzielt wird. Zum anderen wird mit dieser Ausführungsform der Vorteil erreicht, dass durch die Einleitung des Drehmoments am Außenumfang der Filterträgerscheibe im Bereich der drehmomentübertragenden Bauteile nur geringe Kräfte übertragen werden müssen aufgrund des günstigen Hebelarms in Bezug auf die Mittellängsachse am Außenumfang. Dies stellt gegenüber anderen Lösungen, die beispielsweise naheliegend zur Mittellängsachse eine drehmomentübertragende Geometrie oder Funktion vorsehen, eine für die Zuverlässigkeit und Dauerhaftigkeit vorteilhafte Art der Drehmomentübertragung mit reduzierten Kräften dar.

Noch weiter ist es bevorzugt, dass die Antriebsvorrichtung ein sich entlang der Mittellängsachse erstreckendes Übertragungselement umfasst, das mit der am Außenumfang der Filterträgerscheibe ausgebildeten Ausnehmung oder dem am Außenumfang der Filterträger ausgebildeten Vorsprung zur Übertragung des Drehmoments zusammenwirkt. Mit dieser Ausführungsform umfasst die Antriebsvorrichtung ein entsprechendes Übertragungselement, das beispielsweise in Form eines Stabelementes, das sich entlang des Außenumfangs des Filterstapels erstreckt oder in Form von mehreren solchen Stabelementen, die sich in unterschiedlichen Winkellagen längs entlang des Filterstapels erstrecken, gebildet wird. Ein solches Stabelement kann einerseits dazu dienen, den Filterstapel zusammenzuhalten, beispielsweise indem eine entsprechende Verspannungseinrichtung in Längsrichtung entlang der Mittellängsachse bereitgestellt ist. Dies kann in einfachster Form durch entsprechende Stangen mit einer Gewindeverschraubung zum Erzeugen der Verspannungskraft realisiert werden. Diese Stangen greifen zugleich in entsprechende Ausnehmungen oder gegen entsprechende Vorsprünge am Außenumfang der Filterträgerscheiben ein und können hierdurch ein Drehmoment um die Mittellängsachse auf die Filterscheibeneinheiten übertragen.

Noch weiter ist es bevorzugt, dass die Filterscheibeneinheiten in dem Filterstapel entlang der Mittellängsachse übereinander gestapelt angeordnet sind und zwischen zwei benachbarten Filterscheibeneinheiten jeweils ein Fluidverteilraumabschnitt angeordnet ist, wobei jede Filterscheibeneinheit eine oder zwei Durchtrittsöffnung(en) aufweist, um den Durchtritt von partikelbelastetem Fluid von einem auf einer Seite der Filterscheibeneinheit angeordnetem Fluidsammelabschnitt in einen auf der anderen Seite der Filterscheibeneinheit angeordneten Fluidverteilraumabschnitt strömen kann, wobei die Fluidverteilraumabschnitt in dem Filterstapel vorzugsweise solcherart angeordnet sind, dass zwei benachbarte Filterscheibeneinheiten um einen Montageverdrehwinkel um die Mittellängsachse zueinander verdreht in den Filterstapel eingesetzt sind, dass die Durchtrittsöffnungen der beiden benachbarten Filterscheibeneinheiten nicht fluchtend zueinander angeordnet sind, vorzugsweise um einen Montageverdrehwinkel zwischen einschließlich 45° und einschließlich 180° um die Mittellängsachse zueinander verdreht angeordnet sind. Gemäß dieser Ausführungsform sind die Filterscheibeneinheiten auch in besonderer Weise dazu ausgebildet, das Fluid in den Verteilerraum zu verteilen, beziehungsweise durch den Fluidverteilerraum strömen zu lassen. Zu diesem Zweck sind zwischen jeweils zwei benachbarten Filterscheibeneinheiten ein Fluidverteilraumabschnitt bereitgestellt, der Teil des Fluidverteilerraums ist. Das Fluid kann durch eine Öffnung in der Filterscheibeneinheit durch die Filterscheibeneinheit hindurchtreten, dieser Durchtritt erfolgt ohne Filterungswirkung. Diese Durchtrittöffnungen in den Filterscheibeneinheiten ermöglichen daher eine schnelle und vollständige Durchströmung des Filterstapels mit dem partikelbelasteten Fluid und eine vollständige Benetzung der Filterscheibeneinheiten von beiden Seiten im Bereich des Fluidverteilerraumabschnitts zwischen jeweils zwei benachbarten Filterscheibeneinheit.

Die Durchströmung des Filterstapels kann dabei in serieller Weise erfolgen, wenn jeweils genau eine Durchtrittsöffnung in jeder Filterträgerscheibe vorgesehen ist und diese Durchtrittsöffnung wechselweise links und rechts im Filterstapel angeordnet sind. Das Fluid durchströmt dann alle Zwischenräume nacheinander und strömt wie in einem Labyrinth durch den Filterstapel. Die Durchströmung des Filterstapels kann alternativ in paralleler Weise erfolgen, wenn jeweils zwei Durchtrittsöffnung in jeder Filterträgerscheibe vorgesehen ist und diese Durchtrittsöffnung sowohl links als auch rechts im Filterstapel fluchtend angeordnet sind. Das Fluid durchströmt dann alle Zwischenräume in gleicher Richtung.

Gemäß dieser Ausführungsform ist weiterhin vorgesehen, dass die Filterscheibeneinheiten in dem Filterstapel in einer für jeweils zwei benachbarte Filterscheibeneinheiten zueinander um die Mittellängsachse verdrehten Lage montiert sind. Durch diese um einen Montageverdrehwinkel verdrehte Positionierung kommen, wenn Filterscheibeneinheiten mit genau einer Durchtrittsöffnung verwendet werden, die Durchtrittsöffnungen der Filterscheibeneinheiten nicht in einer zueinander fluchtenden Lage zueinander zu liegen, d.h. der Strömungsweg des Fluids durch den Fluidverteilerraum über die Durchtrittsöffnungen in der Vielzahl von Filterscheibeneinheiten ist nicht auf einem geradlinigen Weg möglich. Stattdessen wird das Fluid auf seinem Weg durch den Fluidverteilraum zu einer Durchströmung des Fluidverteilraumabschnitts zwischen zwei Filterscheibeneinheiten umgelenkt, um von eine Durchtrittsöffnung in einer Filterscheibeneinheit zu der nächsten Durchtrittsöffnung in der benachbarten Filterscheibeneinheit zu gelangen. Auf diese Weise wird erreicht, dass in jedem Fluidverteilerraumabschnitt das partikelbelastete Fluid zwischen zwei Filterscheibeneinheiten eine große Fläche der Filterscheibeneinheiten überstreicht und hierdurch der gesamte, innerhalb des Filterstapels zur Verfügung stehende Filterflächenbereich wirksam genutzt und mit hoher Strömungsgeschwindigkeit durchströmt wird. Insbesondere ist es bevorzugt, dass die Durchtrittsöffnung in einer Filterscheibeneinheit um 180° versetzt zu der Durchtrittsöffnung in der dazu benachbarten Filterscheibeneinheit ist, sodass das partikelbelastete Fluid durch den gesamten Fluidverteilerraumabschnitt zwischen den beiden benachbarten Filterscheibeneinheiten strömt, um von der einen Durchtrittsöffnung zu der anderen Durchtrittsöffnung zu gelangen. Das Fluid durchströmt daher alle Fluidverteilerräume der Filterscheibeneinheiten seriell von dem untersten Durchtrittsöffnung zu der obersten Durchtrittsöffnung auf dem Strömungsweg durch den Filterstapel.

Besonders wirksam ist diese Ausführungsform, wenn jede Filterscheibeneinheit nur genau eine Durchtrittsöffnung aufweist, beziehungsweise im Falle von mehreren Durchtrittsöffnungen diese in einem konkret begrenzten Winkelabschnitt von weniger als 45° oder weniger als 25° oder weniger als 10°um die Mittellängsachse angeordnet sind, um hierdurch die gewünschte Verteilung der Flüssigkeit wirksam durch die Bereitstellung einer Montageverdrehwinkels zwischen zwei benachbarten Filterscheibeneinheiten erzielen zu können.

Werden hingegen Filterscheibeneinheiten mit zwei Durchtrittsöffnungen verwendet, die um einen großen Winkel um die Mittellängsachse versetzt zueinander angeordnet sind, kann eine fluchtende Anordnung dieser Durchtrittsöffnungen realisiert werden, sodass sich zwei Durchtrittskanäle durch den Filterstapel ausbilden. In diesem Falls tritt das partikelbelastete Fluid auf einer Seite durch die Fluideinlassöffnung in den Filterstapel ein, und kann dann geradlinig über die ersten Durchtrittsöffnungen, die den ersten Durchtrittskanal bilden, bis in die höchste Filterscheibeneinheit in den Filterstapel einströmen. Die Fluidablauföffnung ist um 180°versetzt zu der Fluideinlassöffnung und fluchtet somit mit den zweiten Durchtrittsöffnungen, die den zweiten Durchtrittskanal bilden. Das Fluid durchströmt daher alle Fluidverteilerräume der Filterscheibeneinheiten parallel von dem ersten Durchtrittskanal zu dem zweiten Durchtrittskanal auf dem Strömungsweg durch den Filterstapel. Grundsätzlich können in einem Filterstapel auch kombinierte Anordnungen aus paralleler und serieller Durchströmung realisiert werden, indem Filterscheibeneinheiten mit nur einer oder mit zwei Durchtrittsöffnungen miteinander zu einem Filterstapel kombiniert werden.

Dabei ist es besonders bevorzugt, dass bei Filterscheibeneinheiten, die einen ersten oder zweiten Drehmomentübertragungsabschnitt aufweisen, wie zuvor erläutert, dass der erste oder der zweite Drehmomentübertragungsabschnitt ausgebildet ist, um die Filterscheibeneinheiten in zumindest zwei unterschiedlichen Winkelanordnungen in dem Filterstapel drehmomentfest aufzunehmen. Gemäß dieser Ausführungsform wird durch den Drehmomentübertragungsabschnitt die für die Bereitstellung eines Montageverdrehwinkels zwischen zwei benachbarten Filterscheibeneinheiten notwendige Möglichkeit der drehmomentfesten Verankerung einer Filterscheibeneinheit in zumindest zwei unterschiedlichen Winkellagen um die Mittellängsachse ermöglicht. Dies kann beispielsweise realisiert sein, in dem ein einziges Übertragungselement sich entlang der Mittellängsachse im Umfangsbereich der Filterscheibeneinheiten erstreckt, um das Drehmoment zu übertragen und in dem dieses Übertragungselement mit jeweils einem von alternativ zwei an jeder Filterscheibeneinheit vorgesehenen Vorsprung oder Ausnehmung zusammen wirkt zur formschlüssigen Drehmomentübertragung. Ebenso können beispielsweise zwei um einen Winkel um die Mittellängsachse versetze Übertragungselemente vorgesehen sein, die in entsprechend zwei zu Drehmomentübertragung ausgebildete Konturen am Außenumfang der Filterscheibeneinheiten eingreifen, wobei diese Konturen in einem Winkel von 180 Grad zueinander angeordnet sind, sodass ein Montageverdrehwinkel von 180 Grad zwischen zwei benachbarten Filterscheibeneinheiten realisiert werden kann.

Noch weiter ist es bevorzugt, wenn jede Filterscheibeneinheit eine Filterträgerscheibe, einen Fluidverteilerraumabschnitt aufweist, zwischen zwei in dem Filterstapel benachbarten Filterträgerscheiben eine Membraneinheit mit einer Membranfilterfläche und einem Filtratsammelraumabschnitt angeordnet ist, wobei die Membraneinheit gegen den Fluidverteilerraum solcherart abgedichtet an den zwei benachbarten Filterträgerscheiben anliegt, dass Fluid nur durch die Membranfilterfläche in den Filtratsammelraumabschnitt in der Membraneinheit strömen kann, der mit dem Filtratsammelraum in Fluidverbindung steht. Vorzugsweise weist die Membraneinheit eine Membranfilterfläche auf, die durch eine an der ersten Filterträgerscheibe anliegende erste Membran und eine an der zweiten Filterträgerscheibe anliegende zweite Membran gebildet wird und der Filtratsammelraumabschnitt der Membraneinheit ist zwischen der ersten und zweiten Membran angeordnet. Gemäß dieser Ausführungsform ist in dem Filterstapel zwischen jeweils zwei benachbarten Filterträgerscheiben eine Membraneinheit eingelegt. Diese Membraneinheit dient einerseits der Filterung der Partikel aus dem partikelbelasteten Fluid, um hieraus Filtrat zu erzeugen, andererseits der Sammlung und Ableitung dieses Filtrats. Zu diesem Zweck weist die Membraneinheit einseitig eine oder beidseitig zwei Membranen auf durch welche das Fluid in einen in der Membraneinheit ausgebildeten, benachbart zur einseitigen Membran bzw. zwischen den zwei beidseitigen Membranen liegenden Filtratsammelraumabschnitt strömen kann. In diesem Filtratsammelraumabschnitt kann das Filtrat zu einem Sammelkanal geführt werden und über die Filtratablauföffnung dann abströmen bzw. abgezogen werden. Beispielsweise kann das Filtrat nach radial einwärts aus dem Filtratsammelraumabschnitt innerhalb der Membraneinheit abgezogen werden, wohingegen die beidseitigen Membranen am Außenumfang miteinander verbunden sind und somit den Eintritt von partikelbelastetem Fluid in den Filtratsammelraumabschnitt über den Außenumfang somit verhindern. Ebenso könnte umgekehrt eine Verbindung der Membranen radial innen vorgesehen sein und das Filtrat über den Außenumfangsabschnitt abgezogen werden. Grundsätzlich ist zu verstehen, dass bei der erfindungsgemäßen Filtrationsvorrichtung Druckverhältnisse zwischen dem Fluidverteilerraum und dem Filtratsammelraum erzeugt werden können, um das Fluid durch die Membranflächen zu fördern. Dieser sogenannte "Transmembrandruck" kann durch einen relativen Unterdruck an der Filtratablauföffnung oder einen relativen Überdruck an der Fluidzulauföffnung oder beides erzeugt werden. Der Transmembrandruck kann beispielsweise zwischen 1 und 100bar liegen und ist von Fluidbeschaffenheit und Membranbeschaffenheit abhängig einzustellen.

Alternativ hierzu ist es bevorzugt, wenn jede Filterscheibeneinheit eine Filterträgerscheibe eine erste Filterfläche auf einer ersten Seite der Filterträgerscheibe und eine zweite Filterfläche auf einer der ersten Seite gegenüberliegenden zweiten Seite der Filterträgerscheibe umfasst und dass die Filterträgerscheibe aus dem Fluidverteilerraum durch die erste und zweite Filterfläche geströmtes Fluid in einem Filterträgerscheibenraum aufnimmt, der mit dem Filtratsammelraum in Fluidverbindung steht. Gemäß dieser Ausführungsform weist die Filterscheibeneinheit auf zumindest einer Seite eine erste Filterfläche auf, vorzugsweise sind auf beiden Seiten der Filterscheibeneinheit eine Filterfläche vorgesehen. Diese Filterflächen können durch separate Membranen bereitgestellt werden, die Bestandteil der Filterscheibeneinheit sind und die auf eine Filterträgerscheibe aufliegen. Die Membranen können beispielsweise frei aufliegen und durch die Strömungs- und Druckverhältnisse innerhalb der Filtrationsvorrichtung auf die Filterträgerscheibe aufgepresst werden. Ebenso können an der Filterträgerscheibe entsprechende Befestigungsmittel zur Fixierung der Membranen vorgesehen sein. Die Filterträgerscheibe weist einen Filterträgerscheibenraum auf, der mit dem Filtratsammelraum in Fluidverbindung steht. Bei dieser Ausführungsform wird das voranstehend erläuterte Prinzip umgekehrt, das partikelbelastete Fluid wird durch die filternde Membran der Filterträgerscheibe zugeführt und aus einem in der Filterträgerscheibe angeordnetem Filtratsammelraumabschnitt abgezogen.

Dies bedeutet, dass der in der Filterträgerscheibe ausgebildete Filterträgerscheibenraum ein Bestandteil des Filtratsammelraums sein kann oder durch eine Strömungsverbindung mit solcher Art in Verbindung steht, das Filtrat, das in dem Filterträgerscheibenraum eingeströmt ist, zu dem Filtratsammelraum strömen kann. Der Filterträgerscheibenraum kann beispielsweise durch eine Verrippung der Oberfläche der Filterträgerscheibe realisiert sein, um hierdurch eine nicht flächige Anlage der Membranen auf der Filterträgerscheibe zu realisieren und die Durchströmung der Membranen zu ermöglichen. Ebenso kann die Filterträgerscheibe einen innenliegenden Hohlraum aufweisen, der durch eine Poröse Filterträgerscheibenwandung für Filtrat, das durch die Membranentritt zugänglich ist. Der Filterträgerscheibenraum kann über einen entsprechenden Strömungskanal, der in der Filterscheibeneinheit ausgebildet ist, mit dem Filtratsammelraum in Fluidverbindung stehen. Beispielweise kann zentral im Bereich der Mittellängsachse ein sich entlang der Mittellängsachse erstreckendes Sammelrohr vorgesehen sein, welches Bestandteil des Filtratsammelraums ist und mit dem jeder Filterträgerscheibenraum in Fluidverbindung steht. Über dieses Sammelrohr kann das Filtrat zu der Fluidlablauföffnung geführt werden und durch diese dann aus der Filtrationsvorrichtung abgeführt werden.

Es ist weiter bevorzugt, wenn die erste und zweite Filterscheibendichtung ausgebildet sind, um nur in genau zwei Winkellagen mit einem vorbestimmten Montageverdrehwinkel um die Mittellängsachse von zwei benachbart aufeinander aufliegenden Filterscheibeneinheiten zueinander passend eine Dichtung auszubilden. Durch diese Ausführungsform wird die Lage der Filterscheibeneinheiten bei der Montage bzw. Stapelung zu dem Filterstapel durch die Zusammenwirkung der Filterscheibendichtungen definiert und ein gewünschter Montageverdrehwinkel dadurch zwangsläufig herbeigeführt. Die Filterscheibendichtungen sind zu diesem Zweck nicht kreisförmig um die Mittellängsachse ausgebildet, sondern weisen zumindest ein nicht-kreisförmiges geometrisches Merkmal auf, das die Winkellage zueinander definiert.

Ein weiterer Aspekt der Erfindung ist eine Filterscheibeneinheit für eine Filtrationsvorrichtung der zuvor beschriebenen Bauart, umfassend eine Filterträgerscheibe mit einer ersten Filterscheibendichtung, die auf einer ersten Seite der Filterträgerscheibe integral ausgebildet und angeordnet ist, und einer zweiten Filterscheibendichtung, die auf einer der ersten Seite gegenüberliegenden zweiten Seite der Filterträgerscheibe integral ausgebildet und angeordnet ist, wobei die erste und die zweite Filterscheibendichtung solcherart ausgebildet sind, dass zwischen zwei gleichartigen Filterträgerscheiben, die solcherart aufeinanderliegend angeordnet sind, dass die erste Seite der einen Filterträgerscheibe der zweiten Seite der anderen Filterträgerscheibe zugewandt ist, die erste Filterscheibendichtung der einen Filterscheibe dichtend mit der zweiten Filterscheibendichtung der anderen Filterscheibe zusammenwirkt. Eine Filterscheibeneinheit dieser Bauart ist zum Einsatz in einer Filtrationsvorrichtung vorgesehen, die gemäß der zuvor beschriebenen Filtrationsvorrichtung nach der Erfindung aufgebaut ist und deren Funktionen aufweist. Insbesondere können mit einer solchen Filterscheibeneinheit entsprechende Filterstapel hergestellt werden. Die Filterscheibeneinheit kann auch dazu eingesetzt werden, um bestehende Filtrationsvorrichtungen nachzurüsten und darin bislang verwendete Filterscheibeneinheiten ohne die erfindungsgemäßen funktionellen Vorteile zu ersetzen.

Die Filterscheibeneinheit kann fortgebildet werden, indem die Filterträgerscheibe eine Trägerscheibe aus einem ersten Material und einen mit der Trägerscheibe stoffschlüssig verbundenen Dichtungsabschnitt aus einem von dem ersten Material verschiedenen zweiten Material umfasst, wobei der Dichtungsabschnitt die erste Filterscheibendichtung bildet, und/oder die erste Filterscheibendichtung durch eine im Bereich eines Außenumfangs der Filterträgerscheibe in Bezug auf eine senkrecht zur Filterträgerscheibe stehende Mittellängsachse umlaufende, im Längsschnitt entlang der Mittellängsachse als Vertiefung oder Vorsprung ausgebildet ist und die zweite Filterscheibendichtung durch eine im Bereich des Außenumfangs der Filterträgerscheibe in Bezug auf die Mittellängsachse umlaufende, im Längsschnitt entlang der Mittellängsachse als entsprechend kongruenter Vorsprung oder Vertiefung ausgebildet ist, wobei der durch die erste und zweite Filterscheibendichtung ausgebildete Vorsprung und die Vertiefung dichtend solcherart zusammenpasst, dass der Vorsprung in der Vertiefung eintaucht, wenn zwei gleichartige Filterträgerscheiben solcherart aufeinanderliegend angeordnet sind, dass die erste Seite der einen Filterträgerscheibe der zweiten Seite der anderen Filterträgerscheibe zugewandt ist, und/oder an der Filterträgerscheibe ein Drehmomentübertragungsabschnitt ausgebildet ist, der zur Übertragung eines Drehmoments um die Mittellängsachse auf die Filterscheibeneinheit ausgestaltet ist, insbesondere zur formschlüssigen Drehmomentübertragung, wobei vorzugsweise der der Drehmomentübertragungsabschnitt durch eine am Außenumfang der Filterträgerscheibe ausgebildete Ausnehmung oder durch einen am Außenumfang der Filterträgerscheibe ausgebildeten Vorsprung gebildet wird, und/oder die erste Filterscheibendichtung und die zweite Filterscheibendichtung ausgebildet sind um eine in Bezug auf eine senkrecht zur Filterträgerscheibe stehende Mittellängsachse umlaufende Dichtung auszubilden, wenn zwei gleichartige Filterträgerscheiben solcherart aufeinanderliegend angeordnet sind, dass die erste Seite der einen Filterträgerscheibe der zweiten Seite der anderen Filterträgerscheibe zugewandt ist, wobei die erste und zweite Filterscheibendichtung die umlaufende Dichtung in zumindest zwei, vorzugsweise nur genau zwei unterschiedlichen Winkelanordnungen um die Mittellängsachse der beiden identischen Filterträgerscheiben zueinander passend ausbildet, und die beiden Filterträgerscheiben in einer der in der beiden Winkelanordnungen um einen vorbestimmten einzigen Montageverdrehwinkel zueinander verdreht aufeinanderliegend angeordnet sind, wobei der Montageverdrehwinkel vorzugsweise zwischen einschließlich 45° und einschließlich 180° liegt.

Gemäß dieser möglichen Fortbildung der Filterscheibeneinheit wird auf die hierzu korrespondierenden Fortbildungen der zuvor beschriebenen Filtrationsvorrichtung, deren Varianten und funktionellen Vorteile Bezuggenommen.

Ein weiterer Aspekt der Erfindung ist ein Verfahren zur Herstellung einer Filterträgerscheibe, mit den Schritten: Formen einer Trägerscheibe aus einem ersten Material mit einer ersten Seite und einer hierzu gegenüberliegenden zweiten Seite, wobei die erste und die zweite Seite senkrecht zu einer Mittellängsachse ausgerichtet sind, Formen einer mit der Trägerscheibe stoffschlüssig verbundenen ersten Filterscheibendichtung aus einem von dem ersten Material verschiedenen zweiten Material auf der ersten Seite, Formen einer zweiten Filterscheibendichtung auf der zweiten Seite, wobei die zweite Filterscheibendichtung so ausgebildet ist, dass zwischen zwei gleichartigen Filterträgerscheiben, die solcherart aufeinanderliegend angeordnet sind, dass die erste Seite der einen Filterträgerscheibe der zweiten Seite der anderen Filterträgerscheibe zugewandt ist, die erste Filterscheibendichtung der einen Filterscheibe dichtend mit der zweiten Filterscheibendichtung der anderen Filterscheibe zusammenwirkt.

Gemäß dieser Ausführungsform wird ein Herstellungsverfahren für eine Filterträgerscheibe bereitgestellt, an der eine erste und eine zweite Filterscheibendichtung einstückig, also integral ausgebildet ist. Die erste oder die zweite oder beide Filterscheibendichtungen können hierbei aus einem Material bestehen, das unterschiedlich von einem Material ist, aus dem eine Trägerscheibe gebildet ist, die Bestandteil der Filterträgerscheibe ist. Die stoffschlüssige Verbindung zwischen der ersten beziehungsweise zweiten Filterscheibendichtung zu der Trägerscheibe kann durch Verkleben, Anspritzen, integrale Ausführung realisiert werden, insbesondere kann die Filterträgerscheibe Bestandteil einer Filterscheibeneinheit sein, die zuvor beschrieben wurde. Die Filterträgerscheibe kann beispielsweise in einem Co-Extrusionsverfahren oder einem Spritzgussverfahren hergestellt werden, wobei zwei unterschiedliche Materialien extrudiert beziehungsweise spritzgegossen werden und eine stoffschlüssige Verbindung zwischen diesen beiden Materialen erzielt wird.

Ein weiterer Aspekt der Erfindung ist ein Verfahren zur Herstellung einer Filtrationsvorrichtung mit einem Filterstapel aus einer Vielzahl von Filterträgerscheiben nach Anspruch 13, mit den Schritten: Aufeinanderlegen der Vielzahl von Filterträgerscheiben zu dem Filterstapel in solcher Weise, dass sich der Filterstapel entlang der Mittellängsachse erstreckt und jeweils jede zwei einander benachbart im Kontakt stehenden Filterträgerscheiben durch Zusammenwirken der ersten Filterscheibendichtung der einen Filterträgerscheibe mit der zweiten Filterscheibendichtung der anderen Filterträgerscheibe einen umlaufend um die Mittellängsachse abgedichteten Innenraum ausbilden, wobei vorzugsweise die erste Filterscheibendichtung und die zweite Filterscheibendichtung ausgebildet sind um eine in Bezug auf eine senkrecht zur Filterträgerscheibe stehende Mittellängsachse umlaufende Dichtung auszubilden, wenn zwei gleichartige Filterträgerscheiben solcherart aufeinanderliegend angeordnet sind, dass die erste Seite der einen Filterträgerscheibe der zweiten Seite der anderen Filterträgerscheibe zugewandt ist, wobei die erste und zweite Filterscheibendichtung die umlaufende Dichtung in zumindest einer Positionierung der beiden identischen Filterträgerscheiben ausbildet, in der die beiden Filterträgerscheiben um einen vorbestimmten Montageverdrehwinkel zueinander verdreht aufeinanderliegend angeordnet sind, wobei der Montageverdrehwinkel vorzugsweise zwischen einschließlich 45° und einschließlich 180° liegt und die erste und zweite Filterscheibendichtung vorzugsweise nur in einer einzigen Lage mit einem vorbestimmten Montageverdrehwinkel zueinander passend eine Dichtung ausbilden.

Gemäß diesem Aspekt der Erfindung wird ein Montageverfahren für eine Filtrationsvorrichtung bereitgestellt, bei dem aus Filterscheibeneinheiten der zuvor beschriebenen Art ein Filterscheibenstapel erstellt wird. In diesem Filterscheibenstapel sind mehrere Filterscheiben aufeinander entlang Mittellängsachse gestapelt. Die Filterscheibeneinheiten weisen dabei jeweils zueinander versetzte Durchtrittsöffnungen bei je zwei benachbarten Filterscheibeneinheiten auf, sodass ein partikelbelastetes Fluid, das durch diese Durchtrittsöffnungen strömt und den Fluidverteilerraum innerhalb dieses Filterstapels ausfüllt die Oberflächen der Filterscheibeneinheiten quasi vollständig entlang strömt und daher zu einer vollständigen Benetzung und einem vollständigen Fluidwechsel durch den Strömungsvorgang entlang dieser Oberflächen führt.

Bei dem erfindungsgemäßen Herstellungsverfahren wird dabei vorteilhaft die Abdichtung des Filterstapels im Außenumfangsbereich der Filterscheibeneinheiten durch die integral ausgebildeten Filterscheibendichtungen bewirkt insbesondere kann durch das Zusammenwirken der ersten und zweiten Filterscheibendichtung eine definierte Lage von zwei benachbarten Filterscheibendichtungen sichergestellt werden und weiterhin erreicht werden, dass zwei benachbarte Filterscheibendichtungen nur in einer bestimmten Ausrichtung zueinander aufeinander gelegt und zueinander abgedichtet werden.

Grundsätzlich kann die Erfindung mit einer Filterscheibeneinheit mit einer, zwei oder mehr Öffnungen ausgeführt sein. Bei einer einzigen Öffnung ist bevorzugt in einem begrenzten Winkelbereich von beipielsweise weniger als 15°, weniger als 10° oder weniger als 5° um die Mittellängsachse der Filterscheibeneinheit der Durchtritt von Fluid von einer Seite der Filterscheibeneinheit auf die andere Seite möglich. Diese Ausgestaltung ermöglicht beispielsweise die versetzte Anordnung der Öffnungen in einem Filterstapel, um eine labyrinth-artige Durchströmung zu erzwingen. Bei Ausbildung von zwei Öffnungen an einer Filterscheibeneinheit können diese zwei Öffnungen winkelversetzt zueinander sein, beispielsweise um 180° winkelversetzt um die Mittellängsachse. Jede der beiden Öffnungen erstreckt sich wiederum über einen begrenzten Winkelbereich wie zuvor. Dies ermöglicht einen Direktdurchtritt durch fluchtende Lage der Öffnungen in einem Filterstapel und kann beispielsweise abschnittsweise eingesetzt werden, um einen geringeren Strömungswiderstand und eine abschnittsweise Parallelverteilung des Fluids anstelle der seriellen Durchströmung des Filterstapels zu erreichen.

Ein bevorzugte Ausführungsform wird anhand der beiliegenden Figuren erläutert. Es zeigen:

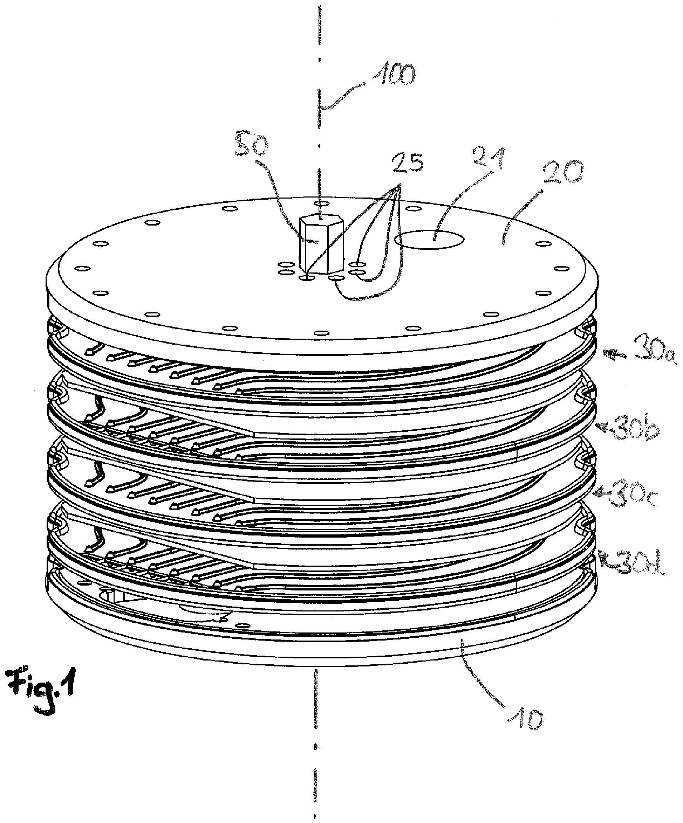

- Figur 1: eine perspektivische, in vertikaler Richtung als Explosionsdarstellung ausgeführte Seitenansicht von seitlich oben einer erfindungsgemäßen Filtrationsvorrichtung,

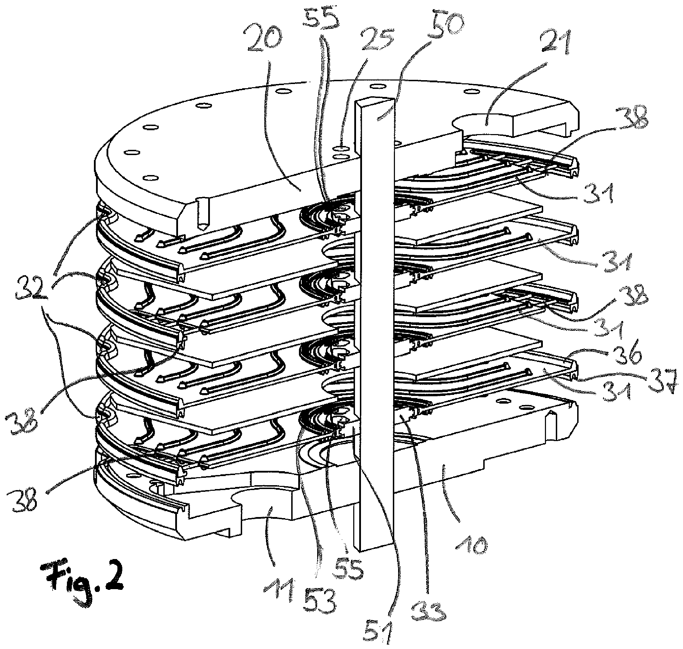

- Figur 2: eine entlang der Mittellängsachse geschnittene perspektivische Ansicht gemäß Figur 1,
- Figur 3: eine entlang der Mittellängsachse geschnittene Seitenansicht der Ausführungsform gemäß Figur 1,
- Figur 3A: eine Ansicht gemäß Figur 3 mit Darstellung der Durchströmung des Fluidverteillerraums innerhalb der Filtrationsvorrichtung,
- Figur 3B: eine Ansicht gemäß Figur 3 mit Darstellung der Durchströmung des Fluidverteillerraums innerhalb der Filtrationsvorrichtung in einer alternativen Ausführungsform, Figur 3C eine Darstellung eines Ausschnitts gemäß Figur 3 mit Darstellung der Hauptdurchströmung durch den Fluidverteilerraum und der Bypassströmung in den Filtratsammelraum,
- Figur 4: eine perspektivische Ansicht einer einzelnen Filterträgerscheibe für die Filtrationsvorrichtung gemäß Figur 1.

Das in den Figuren dargestellte Ausführungsbeispiel der Erfindung umfasst eine biegesteife Bodenplatte 10 und eine biegesteife Deckplatte 20. Die Bodenplatte 10 und die Deckplatte 20 weisen eine im Querschnitt kreisförmige Kontur um eine Mittellängsachse 100 auf. Zwischen der Bodenplatte 10 und der Deckplatte 20 ist ein Filterstapel angeordnet, der sich aus längs entlang der Mittellängsachse 100 aufeinander gestapelten Filterscheibeneinheiten 30a-d zusammensetzt. In den Figuren ist zur Vereinfachung der Darstellung ein Filterstapel abgebildet, der lediglich vier Filterscheibeneinheiten umfasst. Es ist zu verstehen, dass die Erfindung durch Filterstapel mit mehr als vier, insbesondere mehr als zehn, mehr als zwanzig oder mehr als fünfzig Filterscheibeneinheiten realisiert werden kann. Das nachfolgend näher erläuterte Konstruktionsprinzip der Erfindung bewirkt eine Vergrößerung der nutzbaren Filterfläche zur Durchströmung aus dem Fluidverteilerraum in den Filtratsammelraum durch eine solche Erhöhung der Anzahl von Filterscheibeneinheiten.

Die Bodenplatte 10, die Filterscheibeneinheiten 30a-d und die Deckplatte 20 sind auf einen sich entlang der Mittellängsachse 100 erstreckenden Dorn 50 aufgefädelt und stehen im drehmomentübertragenden Formschluss zu diesem Dorn 50. Der Dorn 50 ist als Sechskantprofil ausgeführt und entsprechende Sechskantausnehmungen sind in der Bodenplatte 10, den Filterscheibeneinheiten 30a-d und der Deckplatte 20 vorhanden. Der Dorn 50 ragt aus der Bodenplatte nach unten und aus der Deckplatte nach oben heraus und bildet hierdurch oberhalb und unterhalb der Deckplatte Dornstummel aus. An diesen Dornstummeln kann die Filtrationsvorrichtung aufgenommen und drehbar gelagert werden. Zugleich kann über diese Dornstummel ein Antriebsdrehmoment um die Mittellängsachse 100 eingebracht werden, um die Filtrationsvorrichtung in eine oszillierende Bewegung um die Mittellängsachse 100 zu versetzen. Die Mittellängsachse 100 stellt somit auch eine Rotationsachse dar.

In der Bodenplatte 10 ist exzentrisch zur Mittellängsachse 100 eine Einlassöffnung 11 angeordnet, welche ausgehend von einem kreisrunden Querschnitt in einen erweiterten etwa dreieckig angerundeten Querschnitt nach innen übergeht. In der Deckplatte 20 ist ebenso exzentrisch eine Auslassöffnung 21 angeordnet, die ebenfalls von außen ausgehend einen zunächst kreisförmigen Querschnitt aufweist, der in einen erweiterten, etwa dreieckigen, abgerundeten Querschnitt übergeht.

Die Bodenplatte 10 und die Deckplatte 20 können zueinander übereinstimmend ausgeführt sein. Sie sind auf den Dorn 50 solcherart aufgefädelt, dass sie um eine quer zur Mittellängsachse 100 liegende Ebene gespiegelt angeordnet sind. Zudem sind die Bodenplatte 10 und die Deckplatte 20 zueinander um einen Montageverdrehwinkel von 180 Grad um die Mittellängsachse verschwenkt auf dem Dorn 50 aufgefädelt, sodass die als Fluidzulauföffnung dienende Einlassöffnung 11 in der Bodenplatte in den Darstellungen auf der linken Seite des Dorns 50 angeordnet ist und die als Fluidablauföffnung dienende Auslassöffnung 21 auf der rechten Seite des Dorns, um 180° um die Mittellängsachse verdreht, angeordnet ist. Diese verdrehte Anordnung von Bodenplatte und Deckplatte ist bei der gezeigten Ausführungsform für eine gerade Anzahl von Filterscheibeneinheiten in dem Filterstapel angepasst. Wird eine ungerade Anzahl von Filterscheibeneinheiten in dem Filterstapel verbaut, sind die Einlassöffnung und die Auslassöffnung auf der gleichen Seite zu der Mittellängsachse, insbesondere fluchtend zueinander, anzuordnen.

Der Filterstapel umfasst in der in den Figuren abgebildeten Version insgesamt vier Filterscheibeneinheiten. Die unterste Filterscheibeneinheit 30d liegt unmittelbar an der Bodenplatte 20 an. Jede Filterscheibeneinheit umfasst eine Filterträgerscheibe 31. Jede Filterträgerscheibe weist einen etwa kreisförmigen Umriss im Querschnitt um die Mittellängsachse 100 auf. Der kreisförmige Umriss wird durch zwei Ausnehmungen 32 im Umfang jeder Filterträgerscheibe unterbrochen, die eine Vertiefung in radialer Richtung darstellen. Diese beiden Ausnehmungen 32 im Umfang jeder Filterträgerscheibe 31 sind um einen Winkel von 180 Grad um die Mittellängsachse zueinander versetzt angeordnet.

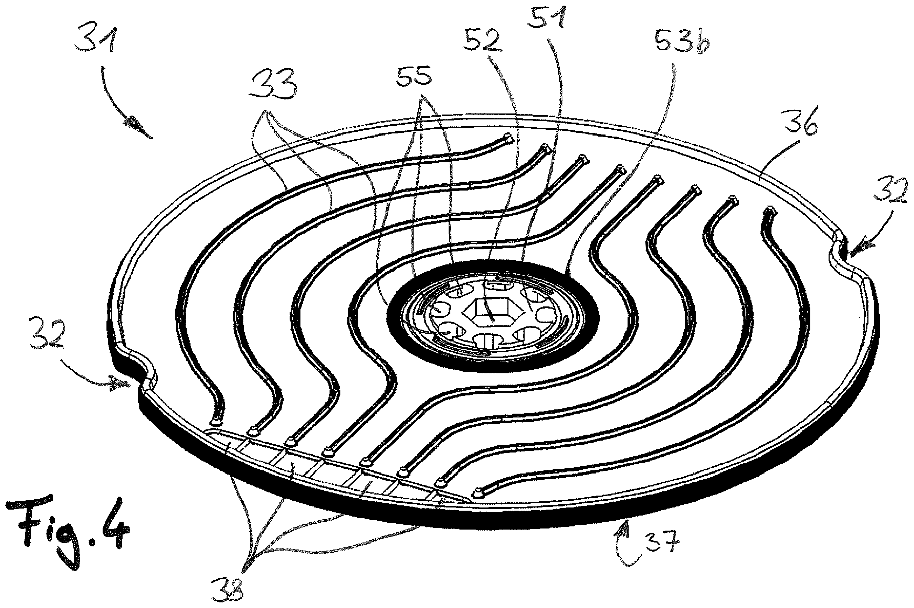

Jede Filterträgerscheibe weist weiterhin einen zentralen Flansch 51 auf, der auf den Dorn 50 aufgefädelt ist, dies ist insbesondere aus Fig. 4 ersichtlich. Der zentrale Flansch 51 weist hierzu eine im Querschnitt sechseckige Ausnehmung 52 auf, die mittig und rotationssymmetrisch zu der Mittellängsachse 100 angeordnet ist. Weiterhin sind im zentralen Flansch 51 mehrere exzentrisch neben dieser Sechskant-Ausnehmung angeordnete Durchgänge 55 mit axialer Erstreckung durch den gesamten Flansch 51 angeordnet. Diese Durchgänge 55 bilden einen Abschnitt des Filtratsammelraums. Die Durchgänge 55 der übereinander gestapelten Filterträgerscheiben 31 sind fluchtend zueinander angeordnet und bilden folglich insgesamt acht durchgehende Kanäle, die in einer kreisförmigen Anordnung gleichmäßig verteilt um die Mittellängsachse 100 angeordnet sind. In der Deckplatte 20 sind ebenfalls fluchtend zu diesen Durchgängen 55 acht Durchgangsöffnungen 25 angeordnet. Diese acht Durchgangsöffnungen 25 dienen als Filtratablauföffnung und das Filtrat kann über diese acht Durchgangsöffnungen, die mit den jeweils acht Durchgängen in jeder Filterträgerscheibe 31 in Fluidverbindung stehen, abgezogen werden. Der Bereich mit den Durchgängen 55 wird auf der oberen Seite von einer Dichtung 53a und auf der unteren Seite von einer Dichtung 53b umschlossen.

Jede Filterträgerscheibe 31 weist weiterhin in einem begrenzten Winkelbereich und außenliegend in Bezug auf die Mittellängsachse 100 eine Durchtrittsöffnung 38 auf. Die Durchtrittsöffnung 38 ermöglicht es, dass partikelbelastetes Fluid von einer Seite (beispielsweise von der unteren Seite) der Filterträgerscheibe auf die andere Seite (also im Beispiel die obere Seite) der Filterträgerscheibe strömt. Die Durchtrittsöffnung 38 ist durch mehrere Stabilisierungsstreben unterteilt und wird in der dargestellten Form als eine einzige Durchtrittsöffnung verstanden.

Die Durchtrittsöffnungen 38 von zwei benachbarten Filterträgerscheiben 31 sind um einen Montageverdrehwinkel von 180 Grad um die Mittellängsachse 100 zueinander verdreht in dem Filterstapel angeordnet. Es ergibt sich somit in dem Filterstapel eine wechselweise Anordnung der Durchtrittsöffnungen 38 auf der linken und rechten Seite. Grundsätzlich sind auch Filterträgerscheiben mit zwei oder mehr Durchtrittsöffnungen in bestimmten Anwendungen einsetzbar und vorteilhaft. So kann beispielsweise gegenüberliegend zu der in Fig. 4 abgebildeten Öffnung, also um 180° versetzt um die Mittellängsachse 100, eine zusätzliche zweite Öffnung vorgesehen sein. Hierdurch wird eine fluchtende Anordnung der Öffnungen auf beiden Seiten des Filterstapels ermöglicht.

Alle Filterträgerscheiben 31 sind im Ausführungsbeispiel identisch ausgeführt. In anderen Konfigurationen der Erfindungen können auch Filterträgerscheiben mit nur einer Durchtrittsöffnung und Filterträgerscheiben mit zwei Durchtrittsöffnungen eingesetzt werden, beispielsweise um in einem Abschnitt des Filterstapels eine Parallelverteilung des Fluids mit geringem Strömungswidersatnd zu erzielen. Es können auch wechselweise Filterträgerscheiben mit einer und zwei Durchtrittsöffnungen aufeinander gestapelt werden, um eine für bestimmte Fluide günstige Verteilung und Filterwirkung zu erzielen.

Der Montageverdrehwinkel von 180 Grad wird einerseits dadurch ermöglicht, dass die Sechskantausnehmung ein Auffädeln der Filterträgerscheiben 31 auf dem Dorn 50 in genau sechs definierten Winkellagen ermöglicht und dass die Ausnehmungen 32 in jeder Filterträgerscheibe nur dann fluchtend zueinander in Richtung der Mittellängsachse angeordnet sind, wenn aus diesen sechs möglichen Montagewinkeln eine von zwei um 180° zueinander verdrehten Positionen gewählt wird. Da die Ausnehmungen 32 dazu dienen, ein zur Drehmomentübertragung dienendes Stabelement (nicht dargestellt), das sich durch die Bodenplatte 10 bis zur und durch die Deckplatte 20 erstreckt, aufzunehmen, muss eine solche fluchtende Anordnung gewählt werden. Der Montageverdrehwinkel von 180 Grad wird daher als einzige Alternative zu einem Montageverdrehwinkel von 0 Grad durch die Montagevorgänge vorgegeben.

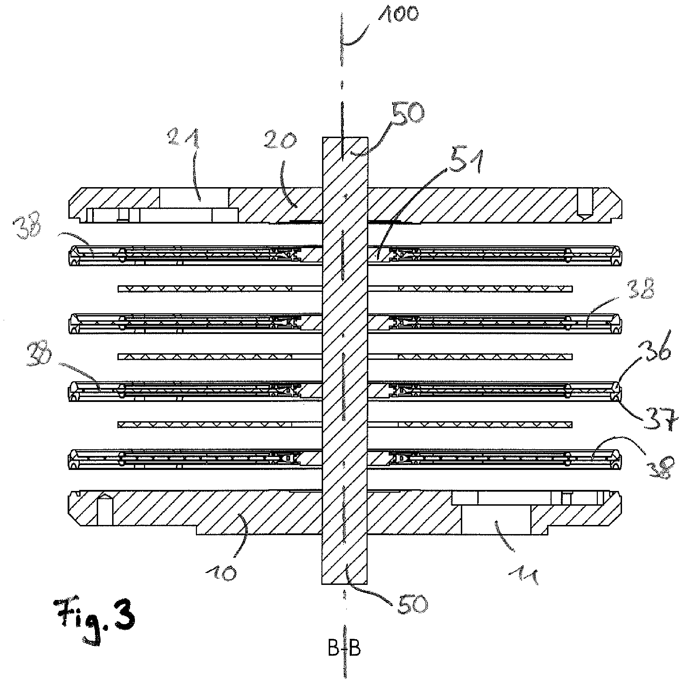

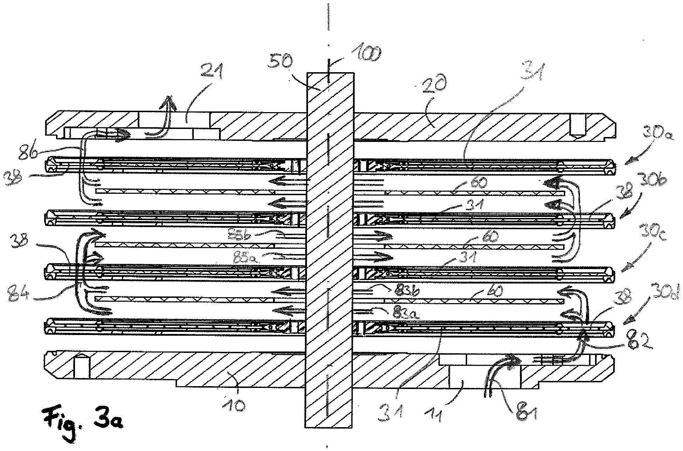

Durch die wechselseitige Anordnung der Durchtrittsöffnungen 38 ergibt sich eine vollständige Umströmung der Filterträgerscheiben 31 in einem Hauptdurchströmungspfad von der Fluideinlassöffnung 11 zu der Fluidauslassöffnung 21. Dieser Hauptdurchströmungspfad des partikelbelasteten Fluids ist in Figur 3A durch Doppelstrichpfeile 81-86 abgebildet. Wie ersichtlich, strömt das Fluid durch die Fluideinlassöffnung 11 in den Filterstapel ein (81) und tritt über den erweiterten Querschnitt der Fluideinlassöffnung 11 in die Durchtrittsöffnung 38 der untersten Filterträgerscheibe 31 ein (82). Das Fluid tritt durch diese Fluiddurchtrittsöffnung 38 der untersten Filterträgerscheibe 31 hindurch und strömt ausgehend von diesem rechten Rand in dem Zwischenraum zwischen der untersten Filterträgerscheibe 31 und der darüber benachbart angeordneten Filterträgerscheibe 31 zur linken Seite des Filterstapels (83a,b). Zwischen jeweils zwei Filterträgerscheiben ist eine Membraneinheit 60 angeordnet. Das Fluid strömt daher in zwei getrennten Fluidströmen 83a, 83b einerseits zwischen dieser zwischen der untersten Filterträgerscheibe 31 und der darüber angeordneten Membraneinheit 60 und andererseits zwischen der Membraneinheit 60 und der darüberliegenden Filterträgerscheibe 31.

Am linken Rand in Figur 3A werden die beiden Fluidströme 83a, b wieder zusammengefasst und durchströmen als gemeinsamer Fluidstrom 84 die links gelegene Durchtrittsöffnung 38 der zweituntersten Filterträgerscheibe 31, welche den Fluidstrom 83b nach oben begrenzte. Das partikelbelastete Fluid gelangt hierdurch in den Zwischenraum zwischen der zweituntersten und der drittuntersten Filterträgerscheibe 31 und strömt in diesen Zwischenraum als wiederum zweigeteilter Strom 85a, b zur rechten Seite des Filterstapels. An dieser rechten Seite des Filterstapels kann das Fluid wiederum durch die Durchtrittsöffnung 38 der drittuntersten Filterträgerscheibe 31 nach oben strömen, gelangt in den Zwischenraum zwischen dieser drittuntersten Filterträgerscheibe und der obersten Filterträgerscheibe, in dem es wiederum als zweigeteilter Strom nach links strömt. Am linken Ende dieses Zwischenraums strömt das Fluid als zusammengeführter Fluidstrom 86 in die Fluidablauföffnung 21 ein.

Aus der Fluidablauföffnung 21 kann das Fluid mittels einer Umwälzpumpe wieder der Fluidzulauföffnung 11 zugeführt werden, um das partikelbelastete Fluid in einem Fluidkreislauf durch die Filtrationsvorrichtung zu führen.

Sowohl an die Fluidzulauföffnung 11 als auch an die Fluidablauföffnung 21 sind hierbei vorzugsweise flexible Schlauchanschlüsse anzuschließen, um das Fluid zu leiten. Durch die flexiblen Schlauchanschlüsse kann die Fluidleitung der oszillierenden Bewegung des gesamten Filterstapels folgen.

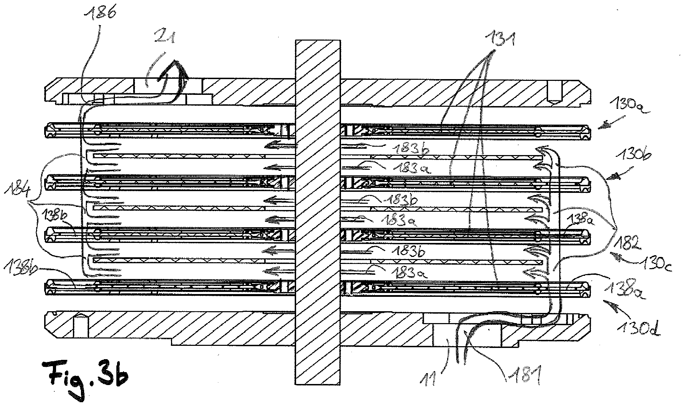

Figur 3B bildet einen alternativen Aufbau der erfindungsgemäßen Filtrationsvorrichtung mit einer alternativen Strömungsführung ab. Das Ausführungsbeispiel unterscheidet sich von zuvor erläuterten Ausführungsbeispiel darin, dass anstelle der Filterträgerscheiben 31 mit einer einzigen Durchtrittsöffnung 38 in dieser alternative Ausführungsform Filterträgerscheiben 131 mit zwei Durchtrittsöffnungen 138a, b eingesetzt sind. Die Durchtrittsöffnungen 138a, b sind um 180° zueinander um die Mittellängsachse versetzt angeordnet.

Bei der Ausführungsform gemäß Figur 3B ergibt sich hierdurch ein anderer Strömungsweg für das partikelbelastete Fluid durch den Filterstapel. Das über die Fluideinlassöffnung 11 einströmende Fluid 181 kann wiederum in die rechtsliegende Öffnung 138a der untersten Filterscheibeneinheit 130d eintreten, dann aber über die darüberliegenden fluchtenden Durchtrittsöffnungen 138a der Filterscheibeneinheiten 130 a-c die gesamte Höhe des Filterstapels durchdringen. Auch linksseitig ist durch die um 180° versetzten Durchtrittsöffnungen ein Kanal ausgebildete, der sich über die gesamte Höhe des Filterstapels erstreckt und der mit der Fluidauslassöffnung 21 in Verbindung steht. Um in einen darin gebildeten linksseitigen Sammelstrom 184 zu gelangen und durch die Fluidauslassöffnung zu strömen (186), durchströmt das Fluid die Zwischenräume entlang der Membraneinheiten von rechts nach links. Es ergibt sich eine Paralleldurchströmung 183a,b der Zwischenräume, also jeder Zwischenraum wird in der gleichen Richtung von rechts nach links durchströmt.

Grundsätzlich können Filterstapel auch als Kombinationen der Varianten gemäß den Figuren 3A und 3B aufgebaut werden und sind von der Erfindung umfasst.

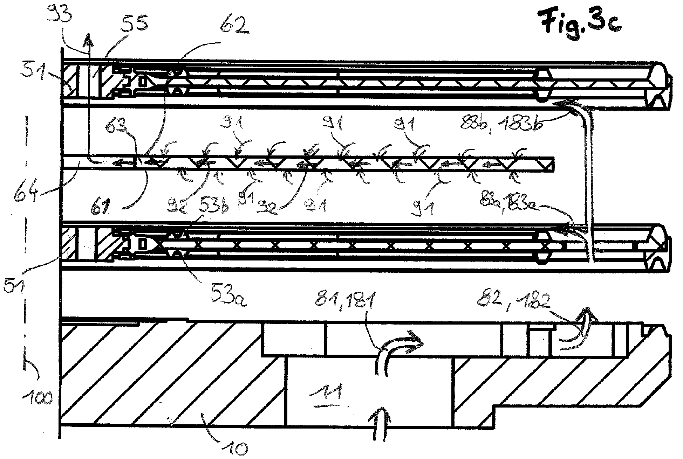

Die Strömung des Fluids durch die Membraneinheiten 60 und die Strömung des Filtrats in den beiden Ausführungsbeispielen gemäß Figur 3A und 3B wird anhand der Figur 3C beschrieben. Figur 3C zeigt die Durchströmung in einem Ausschnitt des Filterstapels, der den rechten Abschnitt der untersten Filterträgerscheibe 31, 131 und der darüber angeordneten zweituntersten Filterträgerscheibe mit dazwischenliegender Membraneinheit zeigt. Jede der Membraneinheiten 60 liegt zwischen den Filterträgerscheiben auf mehreren gekrümmt geführten Rippen 33 auf, welche einen Strömungsweg um den Dorn 50 herum in den Zwischenraum zwischen der Oberfläche der Membraneinheit 60 und der Filterträgerscheibe definieren. Sowohl auf der Oberseite jeder Filterträgerscheibe 31 sind diese Rippen 33 vorgesehen als auch auf der Unterseite jeder Filterträgerscheibe 31 und weisen einen übereinstimmenden Verlauf auf der Ober- und der Unterseite auf. Sowohl zwischen der unteren Seite jeder Membraneinheit 60 und der unterhalb dieser Membraneinheit 60 liegenden Filterträgerscheibe als auch zwischen der Oberseite dieser Membraneinheit und der oberhalb dieser Membraneinheit angeordneten Filterträgerscheibe 31 ist somit ein Fluidverteilerraumabschnitt ausgebildet, der durch diese Auflage der Membraneinheit auf den Rippen 33 gebildet wird. Der Fluidverteilerraumabschnitt ist durch eine unterseitige umlaufende Dichtung 53a und eine oberseitig umlaufende Dichtung 53b im Bereich um den die Durchgänge 55 im Flanschabschnitt 51 jeder Filterträgerscheibe gegenüber den Durchgängen 55 abgedichtet. Das Fluid im Fluidverteilerraum, welches durch die Rippen 33 zwischen jeder Membraneinheit 60 und jeder Filterträgerscheibe 31 fließt, kann daher nicht in den Filtratsammelraumabschnitt, der durch die Durchgänge 55 gebildet wird, direkt eintreten.

Wie bereits in Bezug auf Figur 3A, 3B beschrieben, strömt das partikelbelastete Fluid über die Fluideinlassöffnung 11 in die rechtsliegende Durchtrittsöffnung 38, 138 der untersten Filterträgerscheibe 31, 131 und wird nach Durchtritt durch diese Durchtrittsöffnung 38, 138 in zwei Fluidströme 83a, b, 183a,b aufgeteilt, die unterhalb und oberhalb der Membraneinheit 60 von der rechten Seite des Filterstapels auf die linke Seite des Filterstapels strömen. In Figur 3C ist die zweitunterste Filterträgerscheibe in der Variante nach Fig. 3A dargestellt, also mit einer einzigen, linksseitig angeordneten Durchtrittsöffnung. Es ist zu verstehen, dass hier ebenso ein Ausschnitt aus FIG. 3B wiedergegeben sein könnte, in dem dann eine rechtsseitige Durchtrittsöffnung 138a der zweituntersten Filterträgerscheibe vorhanden wäre, durch welche das Fluid vertikal strömt.

Die Strömung 83a,b, 183a,b erfolgt abgedichtet gegenüber dem zentralen Flanschbereich jeder Filterträgerscheibe 31 in den Kanälen, die durch die Rippen 33 jeder Filterträgerscheibe zwischen der Membraneinheit und der Filterträgerscheibe ausgebildet werden. Die Membraneinheit 60 wird durch diese Strömungsführung beidseits vollständig mit dem partikelbelasteten Fluid benetzt.

Jede Membraneinheit 60 ist dreilagig aufgebaut und weist an ihrer Unterseite eine filternde Membran 61 und an ihrer Oberseite eine hiervon in Richtung der Mittellängsachse beabstandete zweite filternde Membran 62 auf. Zwischen den beiden filternden Membranen 61, 62 ist eine filtratleitende Schicht 63 angeordnet, welche eine in Bezug auf die Mittellängsachse 100 radiale Strömung des Filtrats innerhalb der Membraneinheit ermöglicht. Fluid, das durch die untere Membran 61 oder durch die obere Membran 62 in die Membraneinheit einströmt, wird daher beim Durchtritt durch die Membranen 61, 62 gefiltert und hiermit zu Filtrat. Die beiden Membranen sind an ihrem Außenumfang miteinander verbunden, z.B. verschweißt, verklebt oder vernäht. Mittig weist die Membraneinheit eine kreisförmige Öffnung 64 auf, die zirkulär um die Längsachse 100 angeordnet ist und an welcher ein Austritt von Filtrat aus dem Zwischenraum 63 möglich ist. Nach Durchtritt durch die untere oder obere Membran 61, 62 kann das Filtrat in dem mittleren, als Filtratsammelraum dienenden filtratleitenden Zwischenraum 63 der Membraneinheit nach radial einwärts strömen, tritt aus dem Zwischenraum 63 radial einwärts in die Öffnung 64 ein und strömt zu den Durchgängen 55. Über diese Durchgänge 55 wird das Filtrat in dem Filterstapel nach oben geführt und kann über die entsprechenden Filtratablauföffnungen 25 in der Deckplatte abgezogen werden.

Das partikelbelastete Fluid kann über den gesamten Querschnitt der Membraneinheit durch die untere Membran 61 oder die obere Membran 62 in die Membraneinheit einströmen und wird hierbei gefiltert und folglich zu Filtrat. Diese Einströmung mit Filterwirkung ist durch die Pfeile 91 in Figur 3C dargestellt.

In den dargestellten Ausführungsbeispielen der Figuren 3A und 3B ist daher der untersten Filterscheibeneinheit 30d, 130d eine einzige Membran mit radial ableitendem Filtratsammelraumabschnitt zugeordnet und die Filterträgerscheibe der untersten Filterscheibeneinheit 30d wird nur auf ihrer Oberseite von partikelbelastetem Fluid umströmt. Die beiden mittleren Filterscheibeneinheiten 30b, 30c, 130b, 130c weisen Filterträgerscheiben 31, 131 auf, die beidseitig von partikelbelastetem Fluid umströmt werden und denen beidseitig jeweils eine Membran der benachbarten Membraneinheit zugeordnet ist. Die oberste Filterscheibeneinheit 30a, 130a weist wiederum eine Filterträgerscheibe auf, die nur auf ihrer Unterseite von partikelbelastetem Fluid umströmt wird und der auch nur auf dieser unteren Seite eine Membran der darunterliegenden Membraneinheit zugeordnet ist.

An jeder Filterträgerscheibe ist benachbart zum Außenrand am Außenumfang eine erste Filterscheibendichtung 36 und eine zweite Filterscheibendichtung 37 angeordnet. Die erste Filterscheibendichtung 36 ist als umlaufender Wulst oder im Querschnitt als Vorsprung ausgebildet. Die zweite Filterscheibendichtung ist als umlaufende Nut bzw. im Querschnitt als Vertiefung ausgebildet. Die erste Filterscheibendichtung 36 ist auf der oberen Seite der Filterträgerscheibe angeordnet und die zweite Filterscheibendichtung 37 ist auf der unteren Seite der Filterträgerscheibe angeordnet. Werden zwei identische Filterträgerscheiben übereinandergestapelt, können daher die erste Filterscheibendichtung der einen Filterträgerscheibe und die zweite Filterscheibendichtung der anderen Filterträgerscheibe dichtend zusammenwirken, indem der Wulst in die Nut eingreift und hierbei eine Dichtung ausbildet. Bevorzugt sind die erste und zweite Filterscheibendichtung in solcher Weise kongruent ausgeführt, dass bei Zusammenwirken der beiden Dichtungen mittels Eintauchen des Wulstes in die Nut zwei umlaufende linienförmige Dichtungen ausgebildet werden, es kann aber auch durch eine insgesamt flächige Anlage des Wulstes in der Nut die Dichtungswirkung erzielt werden.

Die erste Filterscheibendichtung 36 ist als gummielastischer Wulst ausgeführt. Dieser gummielastische Wulst weist eine höhere Verformbarkeit auf als das Material, aus dem die zweite Filterscheibendichtung 37 geformt ist. Beispielsweise kann die erste Filterscheibendichtung durch ein elastomeres Material wie allgemein aus einem thermoplastischen Elastomer, beispielsweise thermoplastisches Polyurethan (TPU), Silikon oder bevorzugt einem Styrol-Blockcopolymer (TPE-S) bestehen.

Die zweite Filterscheibendichtung 37 kann bevorzugt ebenso wie der Bereich der Filterträgerscheibe außerhalb des Flansches 39 aus einem demgegenüber weniger elastischen, also steiferen, biegefesten Material bestehen, bevorzugt aus einem Kunststoffmaterial wie beispielsweise Polypropylen oder Polyamid. Insbesondere ist es bevorzugt, hier ein faserverstärktes Material (beispielsweise GFK) zu verwenden, um eine hohe Steifigkeit und Festigkeit in diesem Bereich der Filterträgerscheiben zu erreichen.

Der Flansch 51 mit den darin ausgebildeten Durchgängen 55 kann bevorzugt aus einem metallischen Material, insbesondere einem rostfreien Stahl wie V2A hergestellt sein.

Im Herstellungsprozess kann der Flansch 51 bevorzugt durch Umspritzen mit dem Kunststoffmaterial der Filterträgerscheibe im Bereich der Rippen 33 hergestellt werden und die erste Filterscheibendichtung durch direktes Anspritzen stoffschlüssig, formschlüssig oder durch mechanische Verklammerung an diesem Kunststoffmaterial befestigt werden. Die Filterträgerscheibe mit der ersten Filterscheibendichtung, der zweiten Filterscheibendichtung und dem Flansch 51 sowie der diesen Flansch und die erste Filterscheibendichtung verbindenden mittleren Struktur mit den Rippen 33 ist daher ein einstückiges Bauteil und die Montage daher besonders sicher gegenüber Fehlanordnungen und zuverlässig gegenüber Undichtigkeiten. Es ist zu verstehen, dass alternativ zur ersten Filterscheibendichtung auch die zweite Filterscheibendichtung aus einem elastischeren Material wie einem thermoplastischen Elastomer ausgebildet sein kann und entsprechend angespritzt sein kann. In anderen Ausführungsformen kann auch sowohl die erste als auch die zweite Filterscheibendichtung aus einem elastischeren Material ausgebildet sein und entsprechend stoffschlüssig mit dem steiferen Kunststoffmaterial der Filterträgerscheibe verbunden sein.

Durch den nicht kreisförmigen Verlauf der ersten und zweiten Filterscheibendichtung um die Mittellängsachse 100, sondern der stattdessen den Ausnehmungen 32 im Außenumfang jeder Filterträgerscheibe verlaufenden Kontur dieser ersten und zweiten Filterscheibendichtung wird eine ineinandergreifende Anordnung der ersten und zweiten Filterscheibendichtung bei Anordnung von zwei Filterträgerscheiben 31 übereinander nur in zwei definierten Montagewinkeln erreicht. Neben einer exakt fluchtenden Anordnung der Durchtrittsöffnungen 38 in den beiden zu stapelnden Filterträgerscheiben kommt daher nur eine um einen Montageverdrehwinkel von 180° verdrehte Anordnung der beiden Filterträgerscheiben 31 in Betracht, wenn der formschlüssige Eingriff der ersten und zweiten Filterscheibendichtung hergestellt wird. Dies sichert eine korrekte Montage der beiden Filterträgerscheiben 31 in dem Filterstapel bei der Montage.

## Patentansprüche

1. Filtrationsvorrichtung, umfassend:
- eine Fluidzulauföffnung,
- eine Fluidablauföffnung,
- einen Fluidverteilerraum, der die Fluidzulauföffnung mit der Fluidablauföffnung verbindet, um eine Strömung eines durch die Fluidzulauföffnung einströmenden partikelbelasteten Fluids zu der Fluidablauföffnung zu ermöglichen,
- eine Vielzahl von Filterscheibeneinheiten entlang einer Mittellängsachse gestapelt angeordnet sind, wobei jede Filterscheibeneinheit eine Fluiddurchlässigkeit und eine Partikelsperrfunktion aufweist um eine Filtrationswirkung auf das partikelbelastete Fluid zu bewirken,
- eine Filtratablauföffnung,
- einen Filtratsammelraum, der mit der Filtratablauföffnung in Fluidverbindung steht, wobei jede Filterscheibeneinheit des Filterstapels den Fluidverteilerraum von dem Filtratsammelraum trennt, sodass Fluid durch jede Filterscheibeneinheit von dem Fluidverteilerraum in den Filtratsammelraum übertreten kann und Partikel von jeder Filterscheibeneinheit am Durchtritt aus dem Fluidverteilerraum in den Filtratsammelraum gehindert wird,
wobei die Vielzahl der Filterscheibeneinheiten zu einem sich entlang einer Mittellängsachse erstreckenden Filterstapel aufeinandergestapelt sind, in dem der Fluidverteilerraum angeordnet ist und die Filterscheibeneinheiten in einem Außenumfangsbereich des Filterstapels gegeneinander abgedichtet sind, um den in dem Filterstapel angeordneten Fluidverteilerraum gegen einen den Filterstapel umgebenden Raum abzudichten,
wobei die Abdichtung zweier benachbart in dem Filterstapel angeordneter Filterscheibeneinheiten durch direkte Anlage einer an jeder Filterscheibeneinheit ausgebildeten ersten Filterscheibendichtung an einer an jeder Filterscheibeneinheit ausgebildeten zweiten Filterscheibendichtung ausgebildet ist.

2. Filtrationsvorrichtung nach Anspruch 1,
**dadurch gekennzeichnet, dass** jede Filterscheibeneinheit eine Filterträgerscheibe umfasst, die eine Trägerscheibe aus einem ersten Material und einen an der Trägerscheibe integral ausgebildeten Dichtungsabschnitt, vorzugsweise einen mit der Trägerscheibe stoffschlüssig verbundenen Dichtungsabschnitt aus einem von dem ersten Material verschiedenen zweiten Material umfasst, wobei der Dichtungsabschnitt die erste Filterscheibendichtung bildet.

3. Filtrationsvorrichtung nach Anspruch 1 oder 2,
**dadurch gekennzeichnet, dass** jede Filterscheibeneinheit eine Filterträgerscheibe umfasst und dass die erste Filterscheibendichtung durch eine Vertiefung oder ein Vorsprung ausgebildet ist, die/der im Bereich des Außenumfangs der Filterträgerscheibe in Bezug auf die Mittellängsachse umlaufend ist und sich , im Längsschnitt entlang der Mittellängsachse als Vertiefung oder als Vorsprung darstellt und die zweite Filterscheibendichtung entsprechend durch einen Vorsprung oder eine Vertiefung ausgebildet ist, der/die im Bereich des Außenumfangs der Filterträgerscheibe in Bezug auf die Mittellängsachse umlaufend ist und sich im Längsschnitt entlang der Mittellängsachse als Vorsprung oder Vertiefung darstellt, wobei die durch die erste und zweite Filterscheibendichtung ausgebildete Kombination aus Vorsprung und Vertiefung dichtend zusammenpasst.

4. Filtrationsvorrichtung nach einem der vorhergehenden Ansprüche,
**gekennzeichnet durch** eine Antriebsvorrichtung, die ausgebildet ist, um den Filterstapel mit einem Drehmoment um die Mittellängsachse anzutreiben, insbesondere in eine um die Mittellängsachse konstant rotierende oder reziprok schwenkende Bewegung anzutreiben.

5. Filtrationsvorrichtung nach dem vorhergehenden Anspruch,
**dadurch gekennzeichnet, dass** jede Filterscheibeneinheit einen ersten Drehmomentübertragungsabschnitt umfasst, der ausgebildet ist, um das von der Antriebsvorrichtung antreibende Drehmoment um die Mittellängsachse auf die Filterscheibeneinheit zu übertragen, wobei der erste Drehmomentübertragungsabschnitt als Flansch im Bereich der Mittellängsachse ausgebildet ist, der mit einer sich von dem Flansch erstreckenden Filterträgerscheibe verbunden ist und aus einem dritten Material besteht, das von einem ersten Material, aus dem die Filterträgerscheibe besteht, verschieden ist.

6. Filtrationsvorrichtung nach einem der vorhergehenden Ansprüche,
**dadurch gekennzeichnet, dass** jede Filterscheibeneinheit eine Filterträgerscheibe umfasst und ein zweiter Drehmomentübertragungsabschnitt durch eine am Außenumfang der Filterträgerscheibe ausgebildete Ausnehmung oder durch einen am Außenumfang der Filterträgerscheibe ausgebildeten Vorsprung gebildet wird.
wobei vorzugsweise die Antriebsvorrichtung ein sich entlang der Mittellängsachse erstreckendes Übertragungselement umfasst, das mit der am Außenumfang der Filterträgerscheibe ausgebildeten Ausnehmung oder dem am Außenumfang der Filterträgerscheibe ausgebildeten Vorsprung zur Übertragung des Drehmoments zusammenwirkt.

7. Filtrationsvorrichtung nach einem der vorhergehenden Ansprüche,
**dadurch gekennzeichnet, dass** die Filterscheibeneinheiten in dem Filterstapel entlang der Mittellängsachse übereinander gestapelt angeordnet sind und zwischen zwei benachbarten Filterscheibeneinheiten jeweils ein Fluidverteilerraumabschnitt angeordnet ist, wobei jede Filterscheibeneinheit eine Durchtrittsöffnung aufweist, um den Durchtritt von partikelbelastetem Fluid von einem auf einer Seite der Filterscheibeneinheit angeordnetem Fluidverteilerraumabschnitt in einen auf der anderen Seite der Filterscheibeneinheit angeordneten Fluidverteilerraumabschnitt zu ermöglichen,
wobei die Filterscheibeneinheiten in dem Filterstapel vorzugsweise solcherart angeordnet sind, dass zwei benachbarte Filterscheibeneinheiten um einen Montageverdrehwinkel um die Mittellängsachse solcherart zueinander verdreht in den Filterstapel eingesetzt sind, dass die Durchtrittsöffnungen der beiden benachbarten Filterscheibeneinheiten nicht fluchtend zueinander angeordnet sind, und vorzugsweise um einen Montageverdrehwinkel zwischen einschließlich 45° und einschließlich 180° um die Mittellängsachse zueinander verdreht angeordnet sind.

8. Filtrationsvorrichtung nach Anspruch 5 und Anspruch 7,
**dadurch gekennzeichnet, dass** der erste und/oder der zweite Drehmomentübertragungsabschnitt ausgebildet ist, um die Filterscheibeneinheiten in zumindest zwei, vorzugsweise genau zwei unterschiedlichen Winkelanordnungen um die Mittellängsachse in dem Filterstapel drehmomentfest aufzunehmen.

9. Filtrationsvorrichtung nach einem der vorhergehenden Ansprüche,
**dadurch gekennzeichnet, dass**
- jede Filterscheibeneinheit eine Filterträgerscheibe und einen Fluidverteilerraumabschnitt aufweist, zwischen zwei in dem Filterstapel benachbarten Filterträgerscheiben eine Membraneinheit mit einer Membranfilterfläche und einem Filtratsammelraumabschnitt angeordnet ist, wobei die Membraneinheit gegen den Fluidverteilerraum solcherart abgedichtet an den zwei benachbarten Filterträgerscheiben anliegt, dass Fluid nur durch die Membranfilterfläche in den Filtratsammelraumabschnitt in der Membraneinheit strömen kann, der mit dem Filtratsammelraum in Fluidverbindung steht,
- wobei vorzugsweise die Membraneinheit eine Membranfilterfläche aufweist, die durch eine an der ersten Filterträgerscheibe anliegende erste Membran und eine an der zweiten Filterträgerscheibe anliegende zweite Membran gebildet wird und der Filtratsammelraumabschnitt der Membraneinheit zwischen der ersten und zweiten Membran angeordnet ist.

10. Filtrationsvorrichtung nach einem der vorhergehenden Ansprüche 1-8,
**dadurch gekennzeichnet, dass** eine Filterscheibeneinheit eine Filterträgerscheibe und eine Filterfläche auf einer ersten Seite der Filterträgerscheibe umfasst und dass die Filterträgerscheibe aus dem Fluidverteilerraum durch die erste Filterfläche geströmtes Fluid in einem Filterträgerscheibenraum aufnimmt, der mit dem Filtratsammelraum in Fluidverbindung steht.

11. Filtrationsvorrichtung nach einem der vorhergehenden Ansprüche,
**dadurch gekennzeichnet, dass** die erste und zweite Filterscheibendichtung ausgebildet sind, um nur in genau zwei Winkellagen mit einem vorbestimmten Montageverdrehwinkel um die Mittellängsachse von zwei benachbart aufeinander aufliegenden Filterscheibeneinheiten zueinander passend eine Dichtung auszubilden.

12. Filterscheibeneinheit für eine Filtrationsvorrichtung nach einem der vorhergehenden Ansprüche,
umfassend
- eine Filterträgerscheibe mit
∘ einer ersten Filterscheibendichtung, die auf einer ersten Seite der Filterträgerscheibe integral ausgebildet und angeordnet ist, und
∘ einer zweiten Filterscheibendichtung, die auf einer der ersten Seite gegenüberliegenden zweiten Seite der Filterträgerscheibe integral ausgebildet und angeordnet ist,
- wobei die erste und die zweite Filterscheibendichtung solcherart ausgebildet sind, dass zwischen zwei gleichartigen Filterträgerscheiben, die solcherart aufeinanderliegend angeordnet sind, dass die erste Seite der einen Filterträgerscheibe der zweiten Seite der anderen Filterträgerscheibe zugewandt ist, die erste Filterscheibendichtung der einen Filterscheibe dichtend mit der zweiten Filterscheibendichtung der anderen Filterscheibe zusammenwirkt.

13. Filterscheibeneinheit nach Anspruch 12, **dadurch gekennzeichnet, dass**
- die Filterträgerscheibe eine Trägerscheibe aus einem ersten Material und einen mit der Trägerscheibe stoffschlüssig verbundenen Dichtungsabschnitt aus einem von dem ersten Material verschiedenen zweiten Material umfasst, wobei der Dichtungsabschnitt die erste Filterscheibendichtung bildet, und/oder
- die erste Filterscheibendichtung durch eine im Bereich eines Außenumfangs der Filterträgerscheibe in Bezug auf eine senkrecht zur Filterträgerscheibe stehende Mittellängsachse umlaufende, im Längsschnitt entlang der Mittellängsachse als Vertiefung oder Vorsprung ausgebildet ist und die zweite Filterscheibendichtung durch eine im Bereich des Außenumfangs der Filterträgerscheibe in Bezug auf die Mittellängsachse umlaufende, im Längsschnitt entlang der Mittellängsachse als entsprechend im Wesentlichen kongruenter Vorsprung oder Vertiefung ausgebildet ist, wobei der durch die erste und zweite Filterscheibendichtung ausgebildete Vorsprung und die Vertiefung dichtend solcherart zusammenpasst, dass der Vorsprung in der Vertiefung eintaucht, wenn zwei gleichartige Filterträgerscheiben solcherart aufeinanderliegend angeordnet sind, dass die erste Seite der einen Filterträgerscheibe der zweiten Seite der anderen Filterträgerscheibe zugewandt ist, und/oder
- jede Filterträgerscheibe einen ersten Drehmomentübertragungsabschnitt umfasst, der ausgebildet ist, um das von der Antriebsvorrichtung antreibende Drehmoment um die Mittellängsachse auf die Filterscheibeneinheit zu übertragen, wobei der erste Drehmomentübertragungsabschnitt als Flansch im Bereich der Mittellängsachse ausgebildet ist, der mit einer sich von dem Flansch erstreckenden Filterträgerscheibenabschnitt verbunden ist und aus einem dritten Material besteht, das von einem zweiten Material, aus dem der Filterträgerscheibenabschnitt besteht, verschieden ist, und/oder
- jede Filterscheibeneinheit eine Filterträgerscheibe umfasst und ein zweiter Drehmomentübertragungsabschnitt durch eine am Außenumfang der Filterträgerscheibe ausgebildete Ausnehmung oder durch einen am Außenumfang der Filterträgerscheibe ausgebildeten Vorsprung gebildet wird, und/oder
- die erste Filterscheibendichtung und die zweite Filterscheibendichtung ausgebildet sind um eine in Bezug auf eine senkrecht zur Filterträgerscheibe stehende Mittellängsachse umlaufende Dichtung auszubilden, wenn zwei gleichartige Filterträgerscheiben solcherart aufeinanderliegend angeordnet sind, dass die erste Seite der einen Filterträgerscheibe der zweiten Seite der anderen Filterträgerscheibe zugewandt ist, wobei die erste und zweite Filterscheibendichtung die umlaufende Dichtung in zumindest zwei, vorzugsweise genau zwei unterschiedlichen Winkelanordnungen um die Mittellängsachse der beiden identischen Filterträgerscheiben ausbildet, und die beiden Filterträgerscheiben in einer der beiden Winkelanordnungen um einen vorbestimmten einzigen Montageverdrehwinkel zueinander verdreht aufeinanderliegend angeordnet sind, wobei der Montageverdrehwinkel vorzugsweise zwischen einschließlich 45° und einschließlich 180° liegt.

14. Verfahren zur Herstellung einer Filterträgerscheibe, mit den Schritten:
- Formen einer Trägerscheibe aus einem ersten Material mit einer ersten Seite und einer hierzu gegenüberliegenden zweiten Seite, wobei die erste und die zweite Seite senkrecht zu einer Mittellängsachse ausgerichtet sind,
- Formen einer mit der Trägerscheibe stoffschlüssig verbundenen ersten Filterscheibendichtung aus einem von dem ersten Material verschiedenen zweiten Material auf der ersten Seite,
- Formen einer zweiten Filterscheibendichtung auf der zweiten Seite, wobei die zweite Filterscheibendichtung so ausgebildet ist, dass zwischen zwei gleichartigen Filterträgerscheiben, die solcherart aufeinanderliegend angeordnet sind, dass die erste Seite der einen Filterträgerscheibe der zweiten Seite der anderen Filterträgerscheibe zugewandt ist, die erste Filterscheibendichtung der einen Filterscheibe dichtend mit der zweiten Filterscheibendichtung der anderen Filterscheibe zusammenwirkt.

15. Verfahren zur Herstellung einer Filtrationsvorrichtung mit einem Filterstapel aus einer Vielzahl von Filterträgerscheiben nach Anspruch 12 oder 13, mit den Schritten:
∘ Aufeinanderlegen der Vielzahl von Filterträgerscheiben zu einem Filterstapel in solcher Weise, dass sich der Filterstapel entlang einer Mittellängsachse erstreckt und jeweils jede zwei einander benachbart im Kontakt stehenden Filterträgerscheiben durch Zusammenwirken der ersten Filterscheibendichtung der einen Filterträgerscheibe mit der zweiten Filterscheibendichtung der anderen Filterträgerscheibe einen umlaufend um die Rotationslängsachse abgedichteten Innenraum ausbilden, wobei vorzugsweise die erste und zweite Filterscheibendichtung eine einzige, um einen vorbestimmten Montageverdrehwinkel um die Mittellängsachse verdrehte Lage der zwei benachbarten Filterträgerscheiben durch eine formschlüssige Dichtungswirkung der ersten und zweiten Filterscheibendichtung definieren.
